# EUROPEAN PATENT SPECIFICATION

(11) **EP 4 156 753 B1**
(45) Date of publication and mention of the grant of the patent: **30.07.2025**
(21) Application number: 20937054.3
(22) Date of filing: 06.10.2020
(51) Int. Cl.: H04W 76/32, H04W 24/04, H04L 41/142, H04L 41/147, H04W 8/18, H04W 60/04, H04W 88/14

(54) **METHOD FOR OPERATING SMF USING ANALYSIS INFORMATION OF NWDAF**
VERFAHREN ZUM BETREIBEN VON SMF UNTER VERWENDUNG VON ANALYSEINFORMATIONEN VON NWDAF
PROCÉDÉ D'EXPLOITATION DE SMF À L'AIDE D'INFORMATIONS D'ANALYSE DE NWDAF

(30) Priority: 20.05.2020 KR 20200060389; 13.08.2020 KR 20200101591
(43) Date of publication of application: 29.03.2023
(73) Proprietor: LG Electronics Inc., Seoul 07336 (KR)
(72) Inventor: KIM, Hyunsook, Seoul 06772 (KR); KIM, Laeyoung, Seoul 06772 (KR); YOUN, Myungjune, Seoul 06772 (KR); KIM, Jaehyu, Seoul 06772 (KR)
(74) Representative: Maikowski & Ninnemann Patentanwälte Partnerschaft mbB
(86) International application number: PCT/KR2020/013527
(87) International publication number: WO 2021/235614

(56) References cited:
- WO-A1-2019/032968
- WO-A1-2019/098623
- WO-A1-2019/119435
- WO-A1-2020/074092
- US-A1- 2020 337 093
- QUALCOMM INCORPORATED ET AL: "TS 23.501: PDU sessions handling for LADNs", vol. SA WG2, no. Hangzhou; 20170515 - 20170519, 20 May 2017 (2017-05-20), XP051289463, Retrieved from the Internet <URL:http://www.3gpp.org/ftp/tsg_sa/WG2_Arch/TSGS2_121_Hangzhou/Docs/> [retrieved on 20170520]
- MOTOROLA MOBILITY ET AL: "On UE driven analytic data", vol. SA WG2, no. West Palm Beach, USA; 20181126 - 20181130, 30 November 2018 (2018-11-30), XP051499782, Retrieved from the Internet <URL:http://www.3gpp.org/ftp/tsg%5Fsa/WG2%5FArch/TSGS2%5F129BIS%5FWest%5FPalm%5FBeach/Docs/S2%2D1813385%2Ezip> [retrieved on 20181130]
- SAMSUNG ET AL: "Key Issue 6 Solution Evaluation and Conclusion", vol. SA WG2, no. West Palm Beach, USA; 20181126 - 20181130, 30 November 2018 (2018-11-30), XP051499689, Retrieved from the Internet <URL:http://www.3gpp.org/ftp/tsg%5Fsa/WG2%5FArch/TSGS2%5F129BIS%5FWest%5FPalm%5FBeach/Docs/S2%2D1813200%2Ezip> [retrieved on 20181130]
- "3rd Generation Partnership Project; Technical Specification Group Services and System Aspects; Architecture enhancements for 5G System (5GS) to support network data analytics services (Release 16)", 3GPP STANDARD; TECHNICAL SPECIFICATION; 3GPP TS 23.288, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.3.0, 27 March 2020 (2020-03-27), Mobile Competence Centre ; 650, route des Lucioles ; F-06921 Sophia-Antipolis Cedex ; France , pages 1 - 62, XP051861086
- "3rd Generation Partnership Project; Technical Specification Group Services and System Aspects; Procedures for the 5G System (5GS); Stage 2 (Release 16)", 3GPP STANDARD; TECHNICAL SPECIFICATION; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.4.0, 27 March 2020 (2020-03-27), Mobile Competence Centre ; 650, route des Lucioles ; F-06921 Sophia-Antipolis Cedex ; France , pages 1 - 582, XP051861092

## Description

### TECHNICAL FIELD

The present specification relates to mobile communications, in particular a method, a chipset and a device.

### BACKGROUND

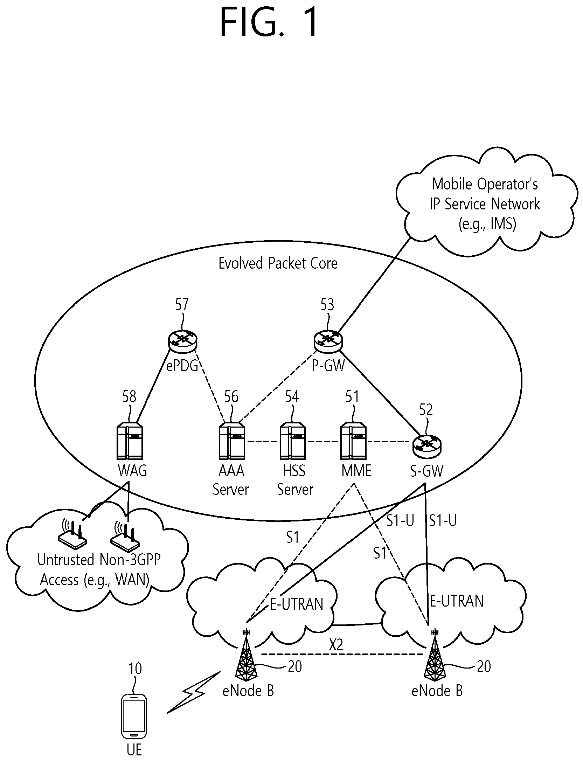

FIG. 1 shows a structure of an evolved mobile communication network.

An Evolved Packet Core (EPC) may include various elements. FIG. 1 illustrates a Serving Gateway (S-GW) 52, a Packet Data Network Gateway (PDN GW) 53, a Mobility Management Entity (MME) 51, a Serving General Packet Radio Service (GPRS) Supporting Node (SGSN), and an enhanced Packet Data Gateway (ePDG) that correspond to some of the various elements.

The S-GW 52 is an element that operates at a boundary point between a Radio Access Network (RAN) and a core network and has a function of maintaining a data path between an eNodeB 22 and the PDN GW 53. Furthermore, if a terminal (or User Equipment (UE)) moves in a region in which service is provided by the eNodeB 22, the S-GW 52 plays a role of a local mobility anchor point. That is, for mobility within an E-UTRAN (Evolved Universal Mobile Telecommunications System (Evolved-UMTS) Terrestrial Radio Access Network defined after 3GPP release-8), packets can be routed through the S-GW 52. Furthermore, the S-GW 52 may play a role of an anchor point for mobility with another 3GPP network (i.e., a RAN defined prior to 3GPP release-8, for example, a UTRAN or Global System for Mobile communication (GSM)/Enhanced Data rates for Global Evolution (EDGE) Radio Access Network (GERAN)).

The PDN GW (or P-GW) 53 corresponds to the termination point of a data interface toward a packet data network. The PDN GW 53 can support policy enforcement features, packet filtering, charging support, etc. Furthermore, the PDN GW (or P-GW) 53 can play a role of an anchor point for mobility management with a 3GPP network and a non-3GPP network (e.g., an untrusted network, such as an Interworking Wireless Local Area Network (I-WLAN), a trusted network, such as a Code Division Multiple Access (CDMA)).

In the network configuration of FIG. 1, the S-GW 52 and the PDN GW 53 have been illustrated as being separate gateways, but the two gateways may be implemented in accordance with a single gateway configuration option.

The MME 51 is an element for performing the access of a UE to a network connection and signaling and control functions for supporting the allocation, tracking, paging, roaming, handover, etc. of network resources. The MME 51 controls control plane functions related to subscribers and session management. The MME 51 manages numerous eNodeBs 22 and performs conventional signaling for selecting a gateway for handover to another 2G/3G networks. Furthermore, the MME 51 performs functions, such as security procedures, terminal-to-network session handling, and idle terminal location management.

The SGSN handles all packet data, such as a user's mobility management and authentication for different access 3GPP networks (e.g., a GPRS network and an UTRAN/GERAN).

The ePDG plays a role of a security node for an unreliable non-3GPP network (e.g., an I-WLAN and a Wi-Fi hotspot).

As described with reference to FIG. 1, a terminal (or UE) having an IP capability can access an IP service network (e.g., IMS), provided by a service provider (i.e., an operator), via various elements within an EPC based on non-3GPP access as well as based on 3GPP access.

Furthermore, FIG. 1 shows various reference points (e.g., S1-U and S1-MME). In a 3GPP system, a conceptual link that connects two functions that are present in the different function entities of an E-UTRAN and an EPC is called a reference point. Table 1 below defines reference points shown in FIG. 1. In addition to the reference points shown in the example of Table 1, various reference points may be present depending on a network configuration.

**[Table 1]**

| REFERENCE POINT | DESCRIPTION |
|---|---|
| S1-MME | A reference point for a control plane protocol between the E-UTRAN and the MME |
| S1-U | A reference point between the E-UTRAN and the S-GW for path |
| | switching between eNodeBs during handover and user plane tunneling per bearer |
| S3 | A reference point between the MME and the SGSN that provides the exchange of pieces of user and bearer information for mobility between 3GPP access networks in idle and/or activation state. This reference point can be used intra-PLMN or inter-PLMN (e.g. in the case of Inter-PLMN HO). |
| S4 | A reference point between the SGW and the SGSN that provides related control and mobility support between the 3GPP anchor functions of a GPRS core and the S-GW. Furthermore, if a direct tunnel is not established, the reference point provides user plane tunneling. |
| S5 | A reference point that provides user plane tunneling and tunnel management between the S-GW and the PDN GW. The reference point is used for S-GW relocation due to UE mobility and if the S-GW needs to connect to a non-collocated PDN GW for required PDN connectivity |
| S11 | A reference point between the MME and the S-GW |
| SGi | A reference point between the PDN GW and the PDN. The PDN may be a public or private PDN external to an operator or may be an intra-operator PDN, e.g., for the providing of IMS services. This reference point corresponds to Gi for 3GPP access. |

Among the reference points shown in FIG. 1, S2a and S2b correspond to non-3GPP interfaces. S2a is a reference point that provides related control and mobility support between trusted non-3GPP access and PDN GWs to the user plane. S2b is a reference point that provides related control and mobility support between ePDG and P-GW to the user plane.

### <Next-generation mobile communication network>

With the success of Long-Term Evolution (LTE)/LTE-Advanced (LTE-A) for the fourth-generation mobile communication, the next generation mobile communication, which is the fifth-generation (so called 5G) mobile communication, has been attracting attentions and more and more researches are being conducted.

The fifth-generation communication defined by the International Telecommunication Union (ITU) refers to providing a maximum data transmission speed of 20Gbps and a maximum transmission speed of 100Mbps per user in anywhere. It is officially called "IMT-2020".

The fifth-generation mobile communication supports multiples numerologies (and/or multiple Subcarrier Spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

NR frequency band is defined as a frequency range of two types, i.e., FR1, FR2. FR1 is 410 MHz - 7125 MHz, and FR2 is 24250 MHz - 52600 MHz, meaning millimeter wave (mmW).

For convenience of explanation, among the frequency ranges used in the NR system, FR1 may mean "sub 6GHz range". FR2 may mean "above 6GHz range", and may be referred to as millimeter Wave (mmW).

**[Table 2]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system can be changed. For example, FR1 may include a band of 410 MHz to 7125 MHz as shown in Table 3 below. That is, FR1 may include a frequency band of above 6 GHz (or, 5850, 5900, 5925 MHz, etc.). For example, a frequency band of above 6 GHz (or, 5850, 5900, 5925 MHz, etc.) included in FR1 may include an unlicensed band. The unlicensed band may be used for various purposes, e.g., for communication for a vehicle (e.g., autonomous driving).

**[Table 3]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The ITU suggests three usage scenarios, e.g., enhanced Mobile Broadband (eMBB), massive Machine Type Communication (mMTC), and Ultra-Reliable and Low Latency Communications (URLLC).

URLLC relates to a usage scenario in which high reliability and low delay time are required. For example, services like autonomous driving, automation, and virtual realities requires high reliability and low delay time (e.g., 1ms or less). A delay time of the current 4G (LTE) is statistically 21-43ms (best 10%), 33-75ms (median). Thus, the current 4G (LTE) is not sufficient to support a service requiring a delay time of 1ms or less.

Next, the eMBB relates to a usage scenario that requires a mobile ultra-wideband.

These ultra-wideband high-speed services seem to be difficult to accommodate by existing core networks designed for LTE/LTE-A.

Therefore, the redesign of core networks is urgently needed in so-called fifth-generation mobile communications.

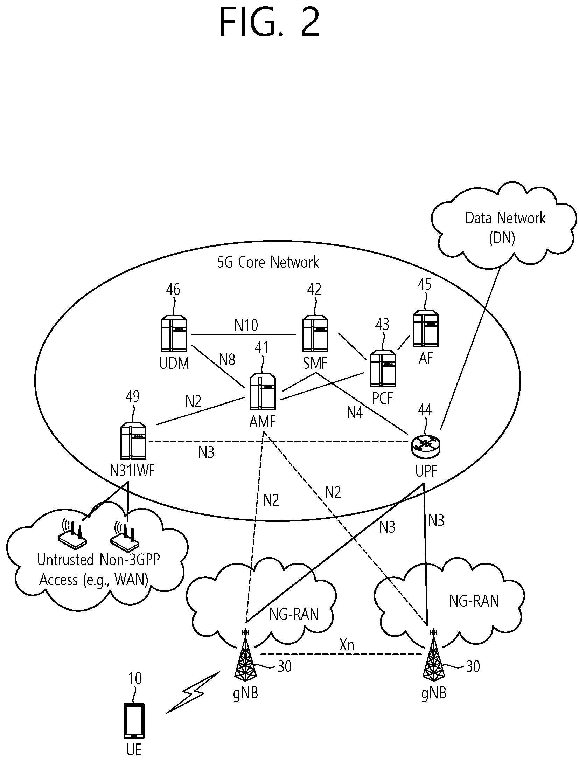

FIG. 2 is a structural diagram of a next-generation mobile communication network.

The 5G Core network (5GC) may include various components, part of which are shown in FIG. 2, including an Access and mobility Management Function (AMF) 41, a Session Management Function (SMF) 42, a Policy Control Function (PCF) 43, a User Plane Function (UPF) 44, an Application Function (AF) 45, a Unified Data Management (UDM) 46 and a Non-3GPP Interworking Function (N3IWF) 49.

A UE 10 is connected to a data network via the UPF 44 through a Next Generation Radio Access Network (NG-RAN), i.e., gNB or base station.

The UE 10 may be provided with a data service even through untrusted non-3GPP access, e.g., a Wireless Local Area Network (WLAN). In order to connect the non-3GPP access to a core network, the N3IWF 59 may be deployed.

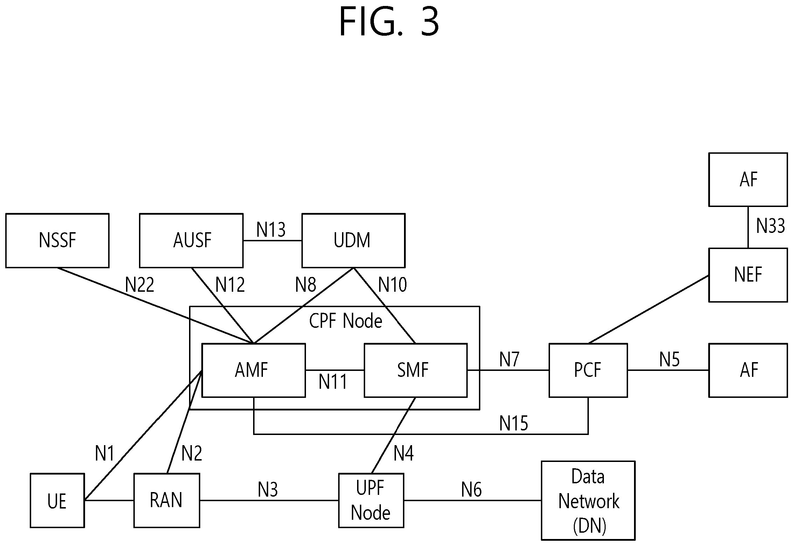

FIG. 3 is an exemplary diagram illustrating a predicted structure of a next generation mobile communication in terms of a node.

Referring to FIG. 3, the UE is connected to a Data Network (DN) through a NG-RAN.

The Control Plane Function (CPF) node as shown may perform all or part of the Mobility Management Entity (MME) function of the fourth generation mobile communication, and all or a part of the control plane function of the Serving Gateway (S-GW) and the PDN-Gateway (P-GW) of the fourth generation mobile communication. The CPF node includes an Access and mobility Management Function (AMF) node and a Session Management Function (SMF).

The User Plane Function (UPF) node as shown is a type of a gateway over which user data is transmitted and received. The UPF node may perform all or part of the user plane functions of the S-GW and the P-GW of the fourth generation mobile communication.

The Policy Control Function (PCF) node as shown is configured to control a policy of the service provider.

The Application Function (AF) node as shown refers to a server for providing various services to the UE.

The Unified Data Management (UDM) node as shown refers to a type of a server that manages subscriber information, such as a Home Subscriber Server (HSS) of 4th generation mobile communication. The UDM node stores and manages the subscriber information in the Unified Data Repository (UDR).

The Authentication Server Function (AUSF) node as shown authenticates and manages the UE.

The Network Slice Selection Function (NSSF) node as shown refers to a node for performing network slicing as described below.

In FIG. 3, a UE can simultaneously access two data networks using multiple Protocol Data Unit (PDU) sessions.

FIG. 4 is an exemplary diagram illustrating an architecture for supporting simultaneously access two data networks.

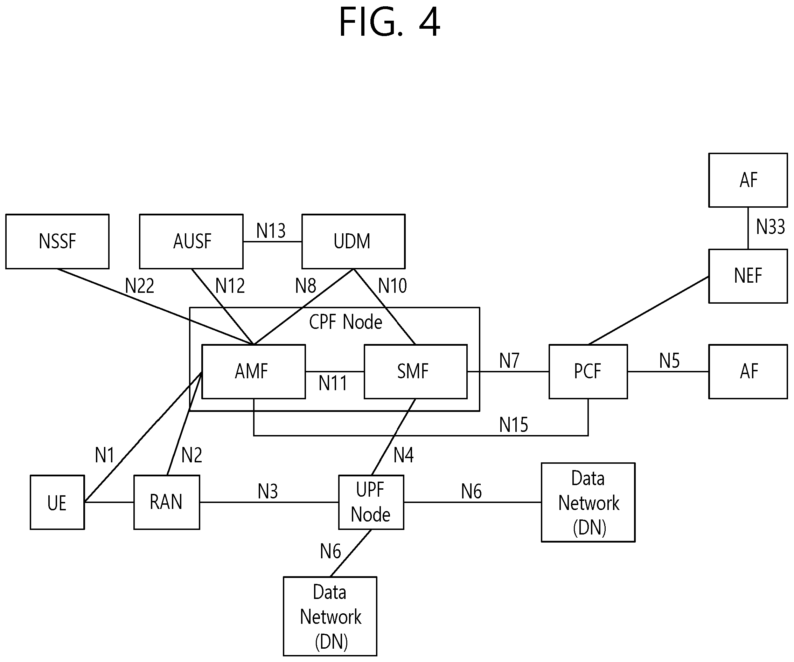

FIG. 4 illustrates an architecture that allows the UE to simultaneously access two data networks using one PDU session.

Reference points shown in FIGS. 3 and 4 are as follows.

N1 is a reference point between UE and AMF.

N2 is a reference point between (R)AN and AMF.

N3 is a reference point between (R)AN and UPF.

N4 is a reference point between SMF and UPF.

N5 is a reference point between PCF and AF.

N6 is a reference point between UPF and DN.

N7 is a reference point between SMF and PCF.

N8 is a reference point between UDM and AMF.

N9 is a reference point between UPFs.

N10 is a reference point between UDM and SMF.

N11 is a reference point between AMF and SMF.

N12 is a reference point between AMF and AUSF.

N13 is a reference point between UDM and AUSF.

N14 is a reference point between AMFs.

N15 is a reference point between PCF and AMF.

N16 is a reference point between SMFs.

N22 is a reference point between AMF and NSSF.

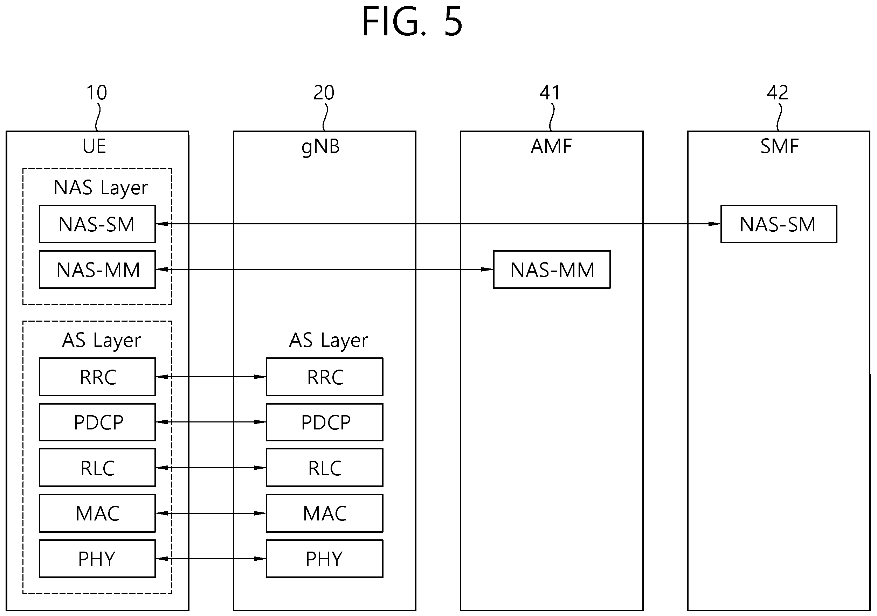

FIG. 5 is another exemplary diagram showing a structure of a radio interface protocol between a UE and a gNB.

The radio interface protocol is based on the 3GPP radio access network standard. The radio interface protocol is horizontally composed of a physical layer, a data link layer, and a network layer, and is vertically divided into a user plane for transmission of data information and a control plane for transfer of control signal (signaling).

The protocol layers may be divided into L1 (first layer), L2 (second layer), and L3 layer (third layer) based on the lower three layers of the Open System Interconnection (OSI) reference model widely known in communication systems.

Hereinafter, each layer of the radio protocol will be described.

The first layer, the physical layer, provides an information transfer service using a physical channel. The physical layer is connected to an upper medium access control layer through a transport channel, and data between the medium access control layer and the physical layer is transmitted through the transport channel. In addition, data is transmitted between different physical layers, that is, between the physical layers of a transmitting side and a receiving side through a physical channel.

The second layer includes a Medium Access Control (MAC) layer, a Radio Link Control (RLC) layer, and a Packet Data Convergence Protocol (PDCP) layer.

The third layer includes Radio Resource Control (hereinafter abbreviated as RRC) layer. The RRC layer is defined only in the control plane and is in charge of control of logical channels, transport channels, and physical channels related to configuration, reconfiguration and release of radio bearers. In this case, RB refers to a service provided by the second layer for data transfer between the UE and the E-UTRAN.

The Non-Access Stratum (NAS) layer performs functions such as connection management (session management) and mobility management.

The NAS layer is divided into a NAS entity for Mobility Management (MM) and a NAS entity for Session Management (SM).
1) NAS entity for MM provides the following functions in general.
   NAS procedures related to AMF include the following.
   - Registration management and access management procedures. AMF supports the following functions.
   - Secure NAS signal connection between UE and AMF (integrity protection, encryption)
2) The NAS entity for SM performs session management between the UE and the SMF.
   The SM signaling message is processed, that is, generated and processed, at an NAS-SM layer of the UE and SMF. The contents of the SM signaling message are not interpreted by the AMF.
   - In the case of SM signaling transmission,
   - The NAS entity for the MM creates a NAS-MM message that derives how and where to deliver an SM signaling message through a security header representing the NAS transmission of SM signaling and additional information on a received NAS-MM.
   - Upon receiving SM signaling, the NAS entity for the SM performs an integrity check of the NAS-MM message, analyzes additional information, and derives a method and place to derive the SM signaling message.

Meanwhile, in FIG. 5, the RRC layer, the RLC layer, the MAC layer, and the PHY layer located below the NAS layer are collectively referred to as an Access Stratum (AS).

A network system (i.e., 5GC) for next-generation mobile communication (i.e., 5G) also supports non-3GPP access. An example of the non-3GPP access is typically a WLAN access. The WLAN access may include both a trusted WLAN and an untrusted WLAN.

In the system for 5G, AMF performs Registration Management (RM) and Connection Management (CM) for 3GPP access as well as non-3GPP access.

In the next-generation (i.e., fifth-generation) mobile communication, it is considered to provide local services (or specialized services for each geographic area). In the next-generation mobile communication, such a local service is being referred to as LADN.

Meanwhile, among network nodes, a Network Data Analytics Function (NWDAF) may collect UE mobility-related information and generate UE mobility statistics or predictions through data analysis.

Recently, research on the functional extension of NWDAF is being conducted. In particular, for LADN, it is necessary to extend the function of NWDAF, but various technologies have not been presented so far, so it faces difficulties.

In 3GPP document S2-173987 titled "TS 23.501: PDU sessions handling for LADNs", the handling of PDU sessions corresponding to LADNs when the UE leaves the area of availability of a LADN is addressed.

In 3GPP document S2-1813385 titled "On UE driven analytic data", the following issues are addressed: what data can be provided by the UE directly to the NWDAF; what analytic information can the NWDAF derive based on the information provided by the UE; and how other NFs can use the NWDAF derived UE analytic information. In 3GPP document S2-1813200 titled "Key Issue 6 Solution Evaluation and Conclusion", evaluation and conclusion for solutions of Key Issue 6 on NWDAF assisting traffic routing are proposed.

WO 2019/098623 A1 relates to a method for supporting a local access data network service by an access and mobility management function in a wireless communication system. The method comprises the steps of: providing local access data network information for the local access data network service to a terminal, wherein the local access data network information includes local access data network service area information and local access data network data network name information; acquiring location information of the terminal; when establishment of a packet data unit session for providing the local access data network service is determined on the basis of the location information of the terminal, transmitting to the terminal a preset message including a request for the establishment of the a packet data unit session; and receiving, from the terminal, a request message for initiating the establishment of the a packet data unit session.

### SUMMARY

Accordingly, an object of the present specification is to propose a method for solving the above-described problems. The invention is defined by the independent claims. Features of certain embodiments are defined in the dependent claims.

According to the disclosure of the present specification, it is possible to solve the problems of the prior art.

### BRIEF DESCRIPTION OF THE DRAWINGS

FIG. 1 shows a structure of an evolved mobile communication network.
FIG. 2 is a structural diagram of a next-generation mobile communication network.
FIG. 3 is an exemplary diagram illustrating a predicted structure of a next generation mobile communication in terms of a node.
FIG. 4 is an exemplary diagram illustrating an architecture for supporting simultaneously access two data networks.
FIG. 5 is another exemplary diagram showing a structure of a radio interface protocol between a UE and a gNB.

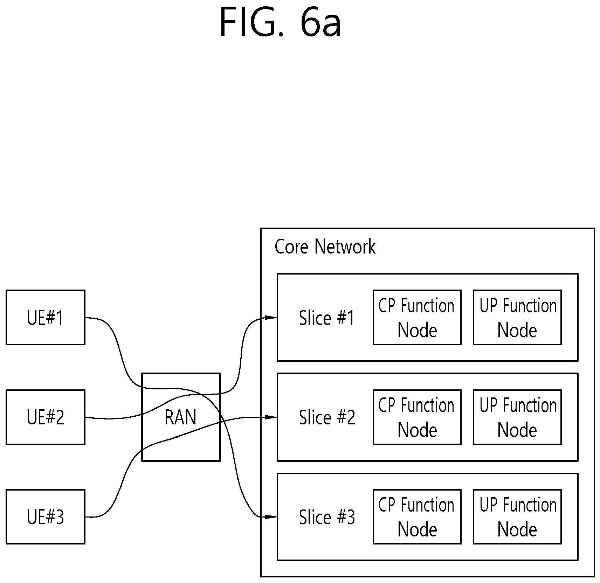

FIG. 6a is an exemplary diagram illustrating an example of an architecture for implementing the concept of network slicing.

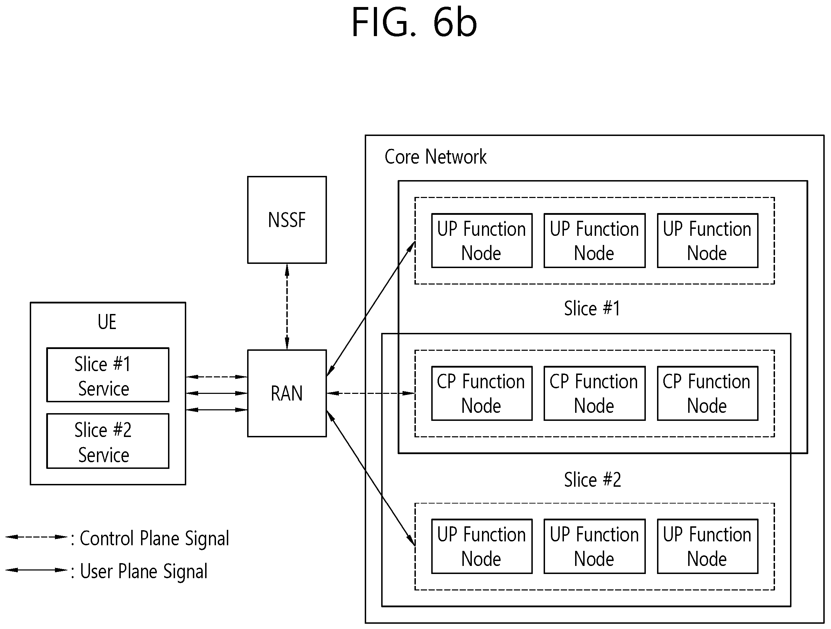

FIG. 6b is an exemplary diagram illustrating another example of an architecture for implementing the concept of network slicing.

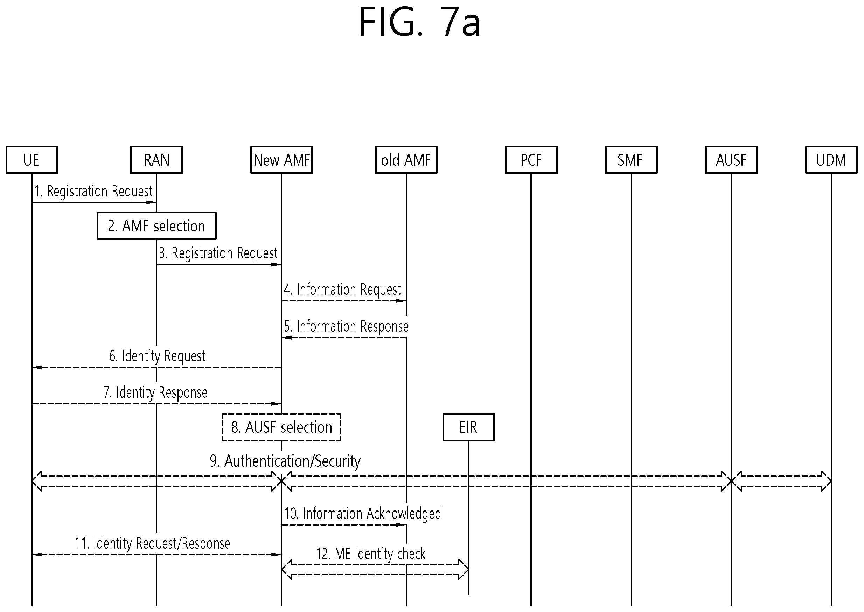

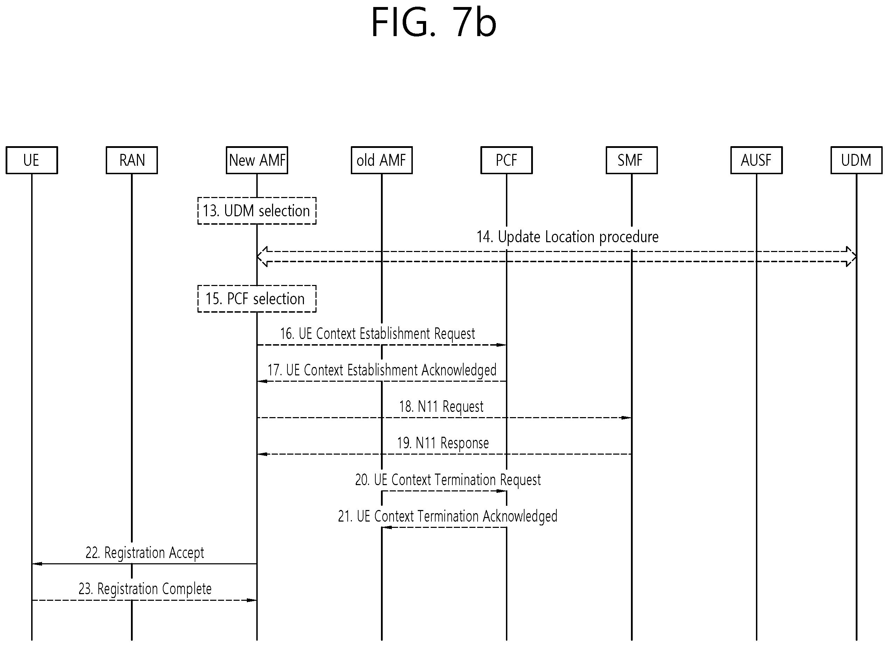

FIGS. 7a and 7b are a signal flowchart illustrating an exemplary registration procedure.

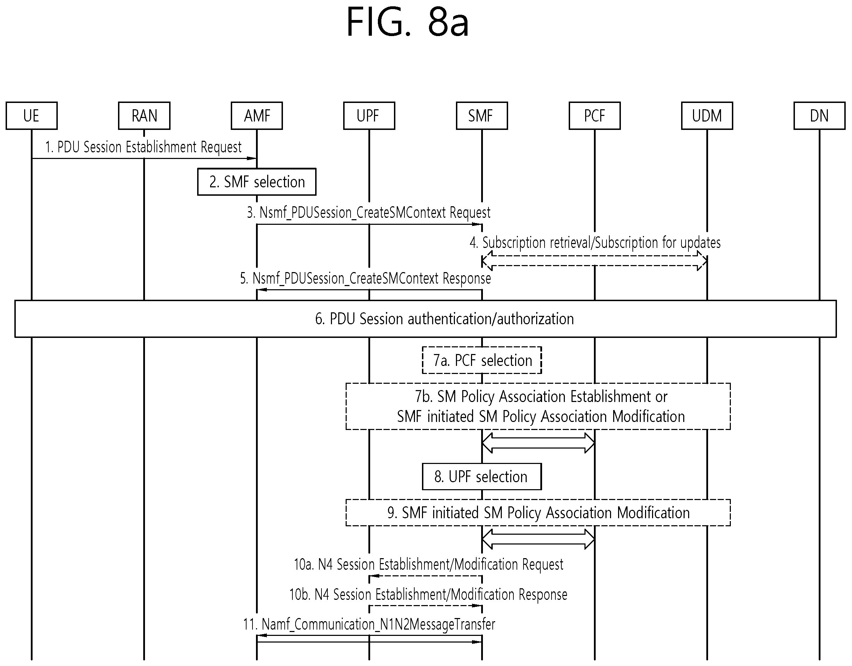

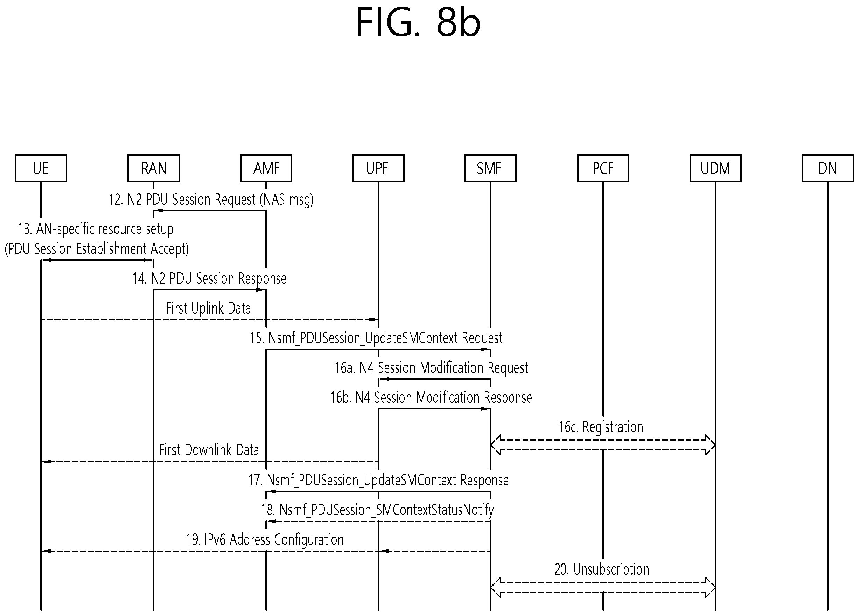

FIGS. 8a and 8b are a signal flowchart illustrating an exemplary PDU session establishment procedure.

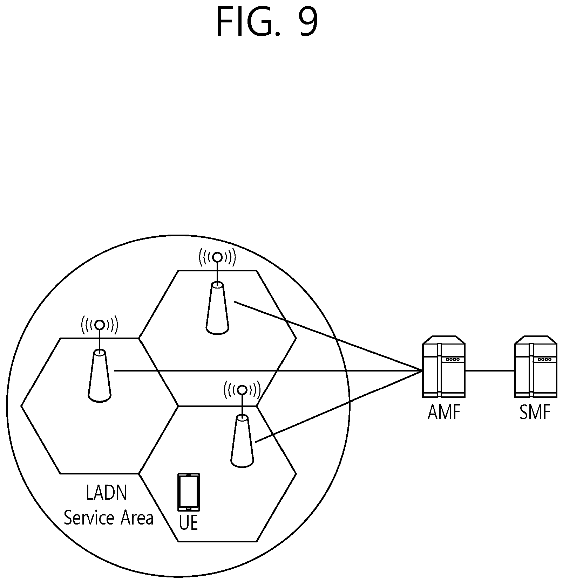

FIG. 9 shows an example of a LADN service.

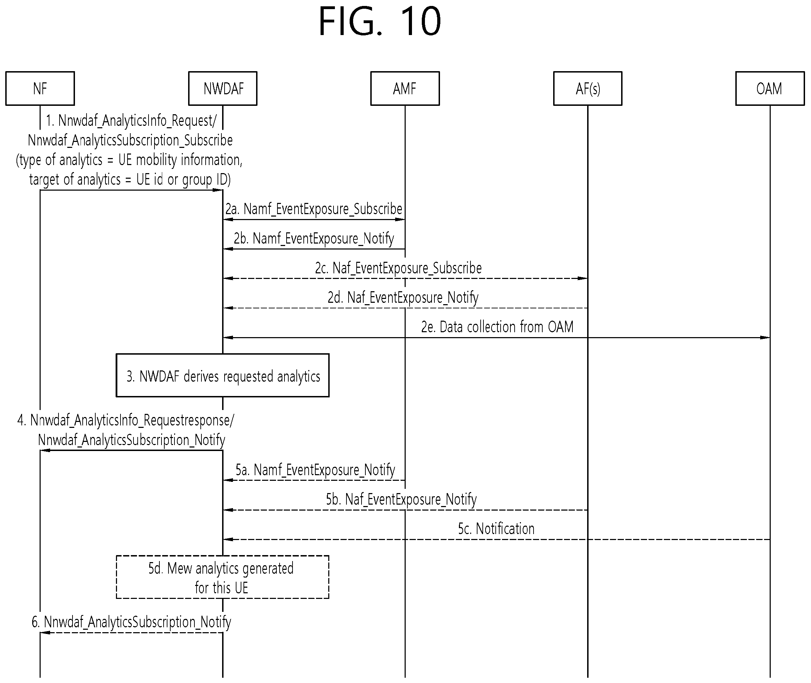

FIG. 10 is an exemplary diagram illustrating a signal flow for the operation of the NWDAF.

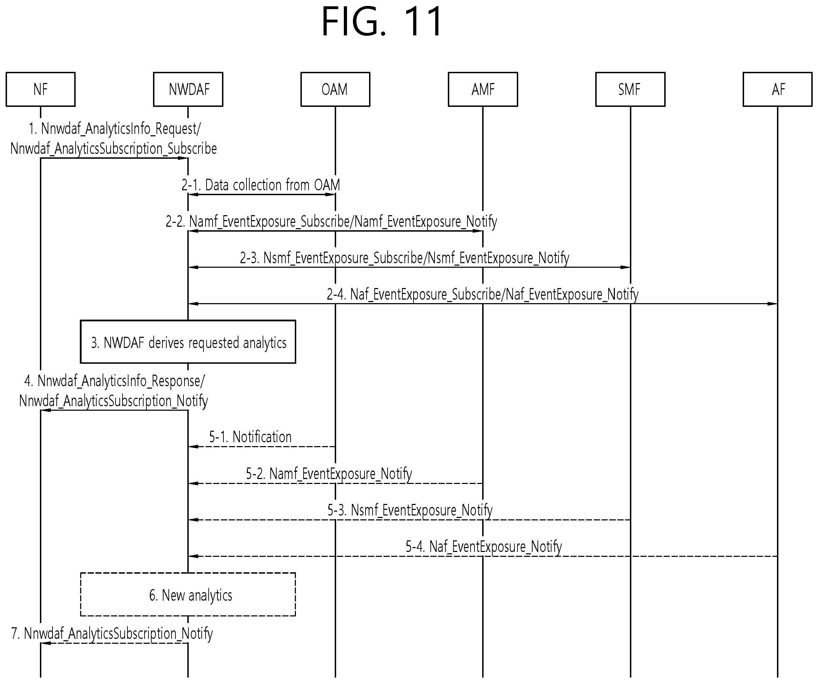

FIG. 11 is a signal flow diagram illustrating an example of providing UE presence pattern analytics in LADN service area to NF.

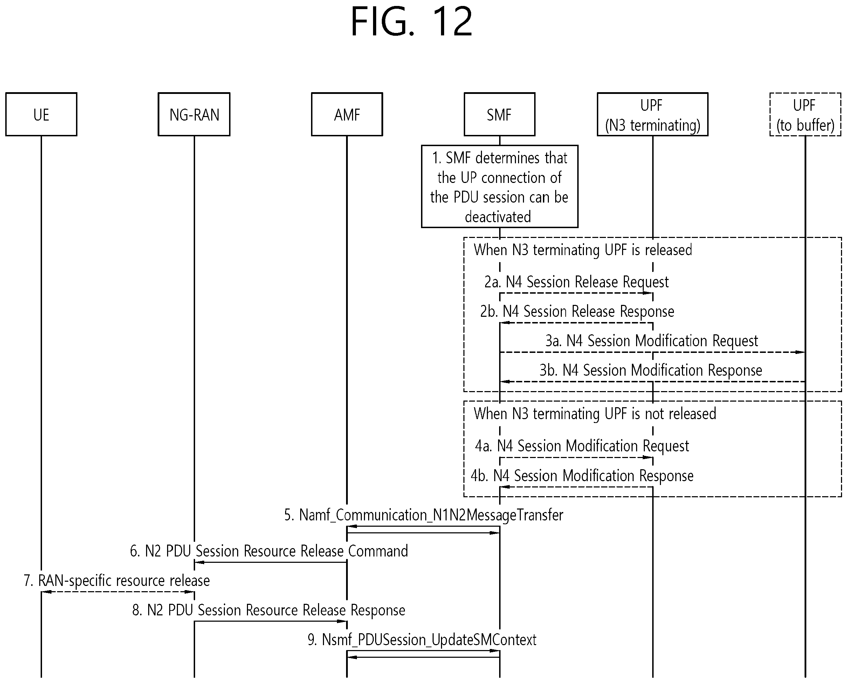

FIG. 12 is an exemplary signal flow diagram illustrating a selective deactivation procedure of a UP connection of a PDU session.

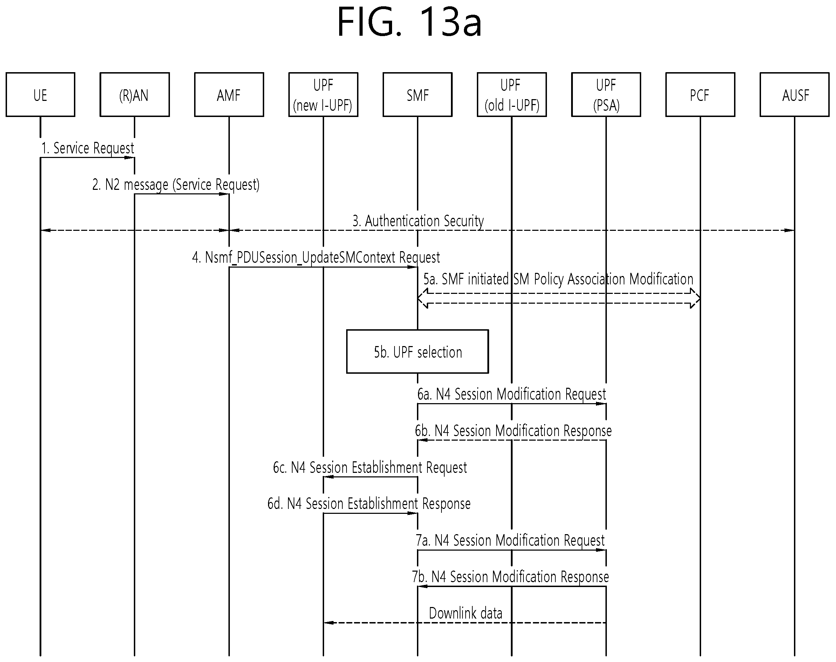

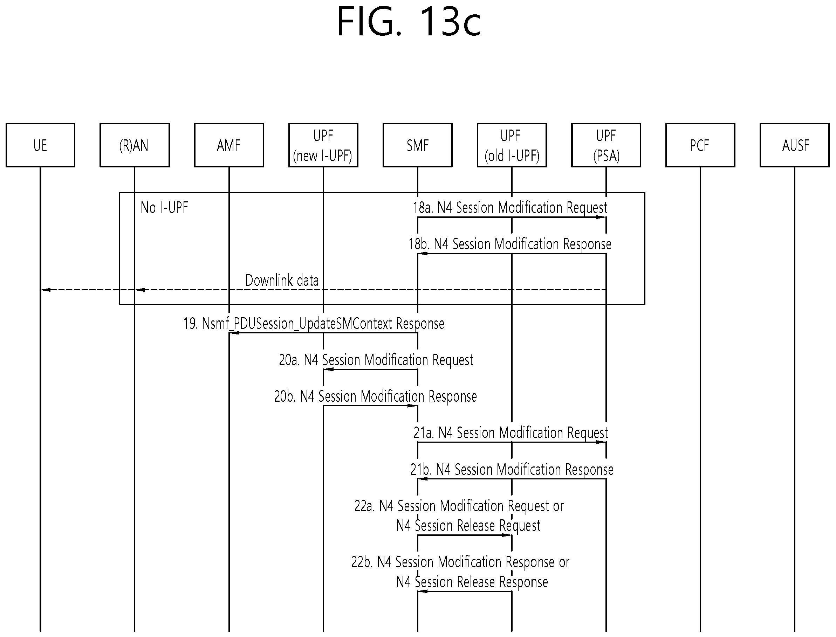

FIGS. 13a to 13c are exemplary signal flow diagrams illustrating a service request procedure.

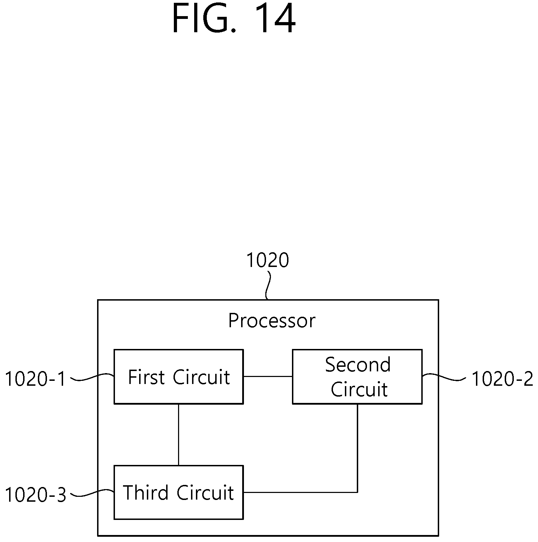

FIG. 14 shows a block diagram of a processor in which the disclosure of the present specification is implemented.

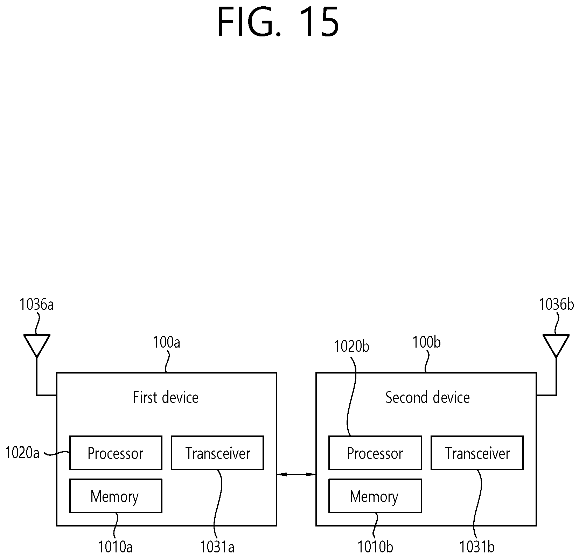

FIG. 15 illustrates a wireless communication system according to an embodiment.

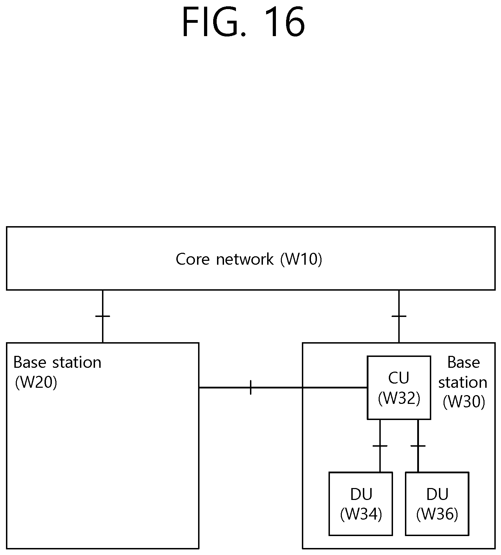

FIG. 16 illustrates a block diagram of a network node according to an embodiment.

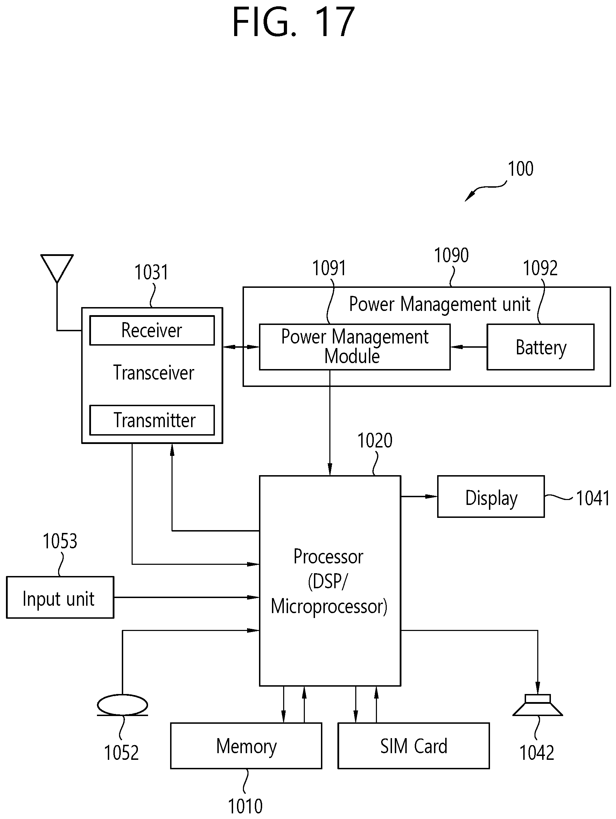

FIG. 17 is a block diagram illustrating a configuration of a UE according to an embodiment.

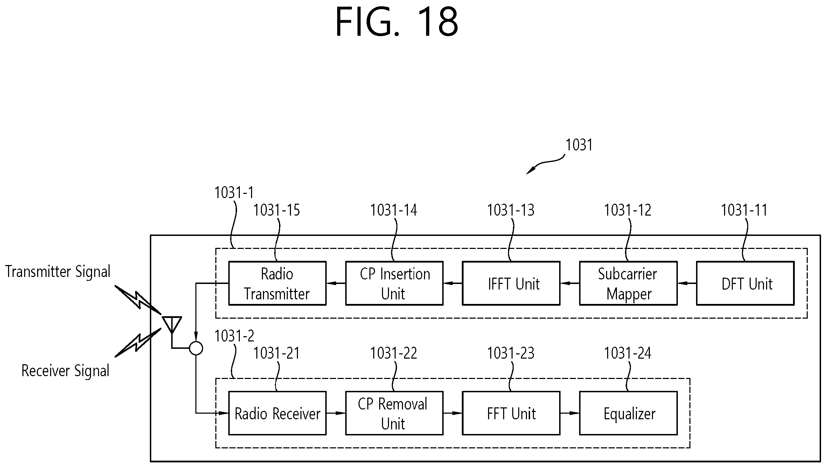

FIG. 18 is a detailed block diagram illustrating the transceiver of the first device shown in FIG. 15 or the transceiver of the device shown in FIG. 17 in detail.

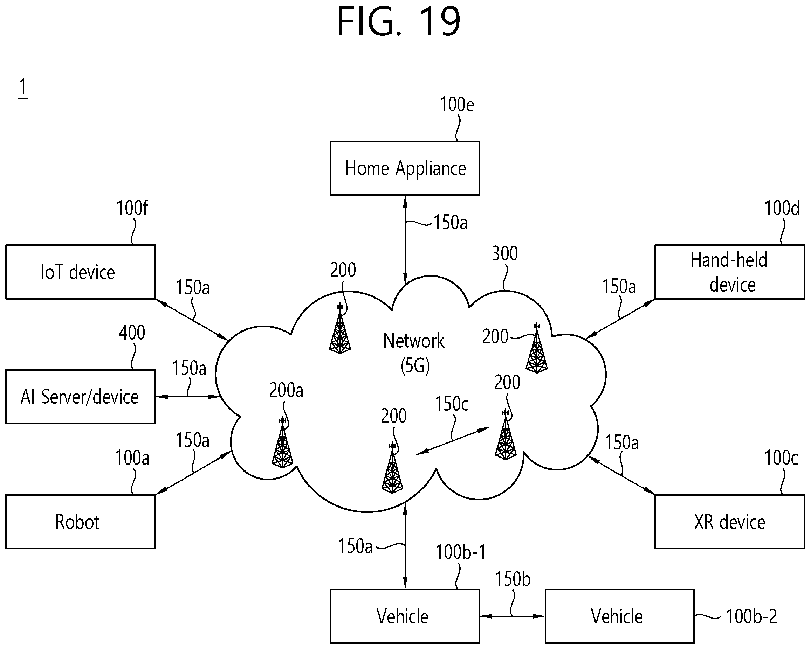

FIG. 19 illustrates a communication system 1 applied to the disclosure of the present specification.

### DETAILED DESCRIPTION

The technical terms used herein are used to merely describe specific embodiments and should not be construed as limiting the present disclosure. Further, the technical terms used herein should be, unless defined otherwise, interpreted as having meanings generally understood by those skilled in the art but not too broadly or too narrowly. Further, the technical terms used herein, which are determined not to exactly represent the disclosure, should be replaced by or understood by such technical terms as being able to be exactly understood by those skilled in the art. Further, the general terms used herein should be interpreted in the context as defined in the dictionary, but not in an excessively narrowed manner.

The expression of the singular number in the present disclosure includes the meaning of the plural number unless the meaning of the singular number is definitely different from that of the plural number in the context. In the following description, the term 'include' or 'have' may represent the existence of a feature, a number, a step, an operation, a component, a part or the combination thereof described in the present disclosure, and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without deviating from the scope of the present disclosure.

It will be understood that when an element or layer is referred to as being "connected to" or "coupled to" another element or layer, it may be directly connected or coupled to the other element or layer or intervening elements or layers may be present. In contrast, when an element is referred to as being "directly connected to" or "directly coupled to" another element or layer, there are no intervening elements or layers present.

Hereinafter, exemplary embodiments of the present disclosure will be described in greater detail with reference to the accompanying drawings. In describing the present disclosure, for ease of understanding, the same reference numerals are used to denote the same components throughout the drawings, and repetitive description on the same components will be omitted. Detailed description on well-known arts which are determined to make the gist of the disclosure unclear will be omitted. The accompanying drawings are provided to merely make the disclosure readily understood, but not should be intended to be limiting of the disclosure. It should be understood that the disclosure may be expanded to its modifications, replacements or equivalents in addition to what is shown in the drawings.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDDCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

In the accompanying drawings, a User Equipment (UE) is illustrated by way of example, but the illustrated UE may also be referred to in terms of UE 100 (terminal), Mobile Equipment (ME), and the like. In addition, the UE may be a portable device such as a notebook computer, a mobile phone, a PDA, a smartphone, or a multimedia device or may be a non-portable device such as a PC or vehicle-mounted device.

### <Network Slice>

Hereinafter, network slicing to be introduced in next-generation mobile communication will be described.

Next-generation mobile communication introduces the concept of network slicing in order to provide various services through one network. Here, the network slicing is a combination of network nodes having functions necessary when providing a specific service. A network node constituting a slice instance may be a hardware independent node or a logically independent node.

Each slice instance may be composed of a combination of all nodes necessary to configure the entire network. In this case, one slice instance may provide a service to the UE alone.

Alternatively, the slice instance may be composed of a combination of some nodes among nodes constituting the network. In this case, the slice instance may not provide a service to the UE alone, but may provide a service to the UE in association with other existing network nodes. In addition, a plurality of slice instances may provide a service to the UE in association with each other.

A slice instance is different from a dedicated core network in that the entire network node including the core network (CN) node and the RAN can be separated. In addition, a slice instance is different from a dedicated core network in that network nodes can simply be logically separated.

FIG. 6a is an exemplary diagram illustrating an example of an architecture for implementing the concept of network slicing.

As can be seen with reference to FIG. 6a, the core network (CN) may be divided into several slice instances. Each slice instance may include one or more of a CP function node and a UP function node.

Each UE may use a network slice instance suitable for its own service through the RAN.

Contrary to that shown in FIG. 6a, each slice instance may share one or more of a CP function node and a UP function node with another slice instance. This will be described with reference to FIG. 6b as follows.

FIG. 6b is an exemplary diagram illustrating another example of an architecture for implementing the concept of network slicing.

Referring to FIG. 6b, a plurality of UP functional nodes is clustered, and similarly, a plurality of CP functional nodes is also clustered.

And, referring to FIG. 6b, slice instance #1 (or referred to as instance #1) in the core network includes a first cluster of UP functional nodes. And, the slice instance #1 shares a cluster of CP functional nodes with slice instance #2 (or called instance #2). The slice instance #2 includes a second cluster of UP functional nodes.

The illustrated NSSF selects a slice (or instance) that can accommodate the service of the UE.

The illustrated UE may use service #1 through the slice instance #1 selected by the NSSF, and may use service #2 through the slice instance #2 selected by the NSSF.

### <Registration Procedure>

In order to allow mobility tracking and data reception to be performed, and in order to receive a service, the UE needs to gain authorization. For this, the UE shall register to a network. The registration procedure is performed when the UE needs to perform initial registration to a 5G system. Additionally, the Registration Procedure is performed when the UE performs periodic registration update, when the UE relocates to a new Tracking Area (TA) in an Idle state, and when the UE needs to perform periodic registration renewal.

During the initial registration procedure, an ID of the UE may be obtained from the UE. The AMF may forward (or transfer) a PEI (IMEISV) to a UDM, SMF, and PCF.

FIGS. 7a and 7b are a signal flowchart illustrating an exemplary registration procedure.
1) The UE may transmit an AN message to the RAN. The AN message may include an AN parameter and a registration request message. The registration request message may include information, such as a register type, a subscriber permanent ID or temporary user ID, a security parameter, Network Slice Selection Assistance Information (NSSAI), 5G capability of the UE, a Protocol Data Unit (PDU) session status, and so on.

In case of a 5G RAN, the AN parameter may include a Subscription Permanent Identifier (SUPI) or a temporary user ID, a selected network, and NSSAI.

The registration type may indicate whether the registration is an "initial registration" (i.e., the UE is in a non-registered state), "mobility registration update" (i.e., the UE is in a registered state, and the registration procedure is initiated by mobility), or "periodic registration update" (i.e., the UE is in a registered state, and the registration procedure is initiated due to the expiration of a periodic update timer). In case a temporary user ID is included, the temporary user ID indicates a last serving AMF. In case the UE has already been registered in a Public Land Mobile Network (PLMN) other than the PLMN of a 3GPP access through a non-3GPP access, the UE may not provide a UE temporary ID, which is allocated by the AMF during a registration procedure through the non-3GPP access.

The security parameter may be used for authentication and integrity protection.

The PDU session status indicates a PDU session that is available (and previously configured) in the UE.

2) In case the SUPI is included, or in case the temporary user ID does not indicate a valid AMF, the RAN may select an AMF based on a (R)AT and NSSAI.

In case the (R)AN cannot select an appropriate AMF, any AMF is selected according to a local policy, and the registration request is forwarded (or transferred) by using the selected AMF. If the selected AMF cannot provide service to the UE, the selected AMF may select another AMF that is more appropriate for the UE.

3) The RAN transmits an N2 message to a new AMF. The N2 message includes an N2 parameter and a registration request. The registration request may include a registration type, a subscriber permanent identifier or temporary user ID, a security parameter, NSSAI, MICO mode default settings (or configuration), and so on.

When a 5G-RAN is used, the N2 parameter includes location information related to a cell in which the UE is camping, a cell identifier, and a RAT type.

If the registration type indicated by the UE is a periodic registration update, Step 4 to Step 17, which will be described in detail later on, may not be performed.

4) The newly selected AMF may transmit an information request message to the previous AMF.

In case the temporary user ID of the UE is included in a registration request message, and in case the serving AMF is changed after the last registration, a new AMF may include an information request message, which includes complete registration request information for requesting SUPI and MM context of the UE, to the previous (or old) AMF.

5) The previous (or old) AMF transmits an information response message to the newly selected AMF. The information response message may include SUPI, MM context, and SMF information.

More specifically, the previous (or old) AMF transmits an information response message including SUPI and MM context of the UE.
- In case information on an active PDU session is included in the previous (or old) AMF, SMF information including SMF ID and PDU session ID may be included in the information response message of the previous (or old) AMF.

6) In case the SUPI is not provided by the UE, or in case the SUPI is not searched from the previous (or old) AMF, the new AMF transmits an Identity Request message to the UE.

7) The UE transmits an Identity Response message including the SUPI to the new AMF.

8) The AMF may determine to perform triggering of an AUSF. In this case, the AMF may select an AUSF based on the SUPI.

9) The AUSF may initiate authentication of the UE and the NAS security function.

10) The new AMF may transmit an information response message to the previous (or old) AMF.

If the AMF is changed the new AMF may transmit the information response message in order to verify the forwarding of UE MM context.
- If the authentication/security procedure is failed, the registration is rejected, and the new AMF may transmit a rejection message to the previous (or old) AMF.

11) The new AMF may transmit an Identity Request message to the UE.

In case a PEI is not provided by the UE, or in case a PEI is not searched from the previous (or old) AMF, an Identity Request message may be transmitted in order to allow the AMF to search the PEI.

12) The new AMF checks an ME identifier.

13) If Step 14, which will be described later on, is performed, the new AMF selects a UDM based on the SUPI.

14) If the AMF is modified after the final registration, if valid subscription context of the UE does not exist in the AMF, or if the UE provides a SUPI, wherein the AMF does not refer to a valid context, the new AMF initiates an Update Location procedure. Alternatively, even in a case where a UDM initiates Cancel Location for the previous AMF, the Update Location procedure may be initiated. The previous (or old) AMF discards the MM context and notifies all possible SMF(s), and, after obtaining AMF-related subscription data from the UDM, the new AMF generates MM context of the UE.

In case network slicing is used, the AMF obtains allowed NSSAI based on the requested NSSAI and UE subscription and local policy. In case the AMF is not appropriate for supporting the allowed NSSAI, the registration request is re-routed.

15) The new AMF may select a PCF based on the SUPI.

16) The new AMF transmits a UE Context Establishment Request message to the PCF. The AMF may request an operator policy for the UE to the PCF.

17) The PCF transmits a UE Context Establishment Acknowledged message to the new AMF.

18) The new AMF transmits an N11 request message to the SMF.

More specifically, when the AMF is changed, the new AMF notifies the new AMF that provides services to the UE to each SMF. The AMF authenticates the PDU session status from the UE by using available SMF information. In case the AMF is changed, the available SMF information may be received from the previous (or old) AMF. The new AMF may send a request to the SMF to release (or cancel) network resources related to a PDU session that is not activated in the UE.

19) The new AMF transmits an N11 response message to the SMF.

20) The previous (or old) AMF transmits a UE Context Termination Request message to the PCF.

In case the previous (or old) AMF has previously requested UE context to be configured in the PCF, the previous (or old) AMF may delete the UE context from the PCF.

21) The PCF may transmit a UE Context Termination Request message to the previous (or old) AMF.

22) The new AMF transmits a Registration Accept message to the UE. The Registration Accept message may include a temporary user ID, registration area, mobility restriction, PDU session status, NSSAI, periodic registration update timer, and allowed MICO mode.

The registration accept message may include information on the allowed NSSAI and the mapped NSSAI. The information on the allowed NSSAI information for the UE's access type may be contained within N2 messages containing the registration accept message. The information on the mapped NSSAI is information for mapping each S-NSSAI of the allowed NSSAI to the S-NASSI of the NSSAI set up for HPLMN.

In case the AMF allocated a new temporary user ID, the temporary user ID may be further included in the Registration Accept message. In case the mobility restriction is applied to the UE, information indicating the mobility restriction may be additionally included in the Registration Accept message. The AMF may include information indicating the PDU session status for the UE in the Registration Accept message. The UE may remove any internal resource being related to a PDU session that is not marked as being active from the received PDU session status. If the PDU session status information is included in the Registration Request, the AMF may include the information indicating the PDU session status to the UE in the Registration Accept message.

23) The UE transmits a Registration Complete message to the new AMF.

### <PDU Session Establishment Procedure>

For the PDU Session Establishment procedure, two different types of PDU Session Establishment procedures may exist as described below.
- A PDU Session Establishment procedure initiated by the UE.
- A PDU Session Establishment procedure initiated by the network. For this, the network may transmit a Device Trigger message to an application (or applications) of the UE.

FIGS. 8a and 8b are a signal flowchart illustrating an exemplary PDU session establishment procedure.

The procedure shown in FIGS. 8a and 8b assumes that the UE has already registered on the AMF according to the registration procedure shown in FIG. 7. Therefore, it is assumed that the AMF has already acquired user subscription data from UDM.
1) The UE transmits a NAS message to the AMF. The message may include Single Network Slice Selection Assistance Information (S-NSSAI), Data network Name (DNN), PDU session ID, a Request type, N1 SM information, and so on.

Specifically, the UE includes S-NSSAI from allowed NSSAI for the current access type. If information on the mapped NSSAI has been provided to the UE, the UE may provide both S-NSSAI based on the allowed NSSAI and the corresponding S-NSSAI based on the information on the mapped NSSAI. Here, the information on the mapped NSSAI is information on mapping of each S-NSSAI in the allowed NSSAI to the S-NASSI in the NSSAI set up for Home Public Land Mobile Network (HPLMN).

More specifically, the UE may extract and store the allowed NSSAI and the information on the mapped NSSAI, included in the registration accept message received from the network (i.e., AMF) in the registration procedure in FIG. 6. Therefore, the UE may transmit by including both S-NSSAI based on the allowed NSSAI and the corresponding S-NSSAI based on the information on the mapped NSSAI in the PDU session establishment request message.

In order to establish a new PDU session, the UE may generate a new PDU session ID.

By transmitting a NAS message having a PDU Session Establishment Request message included in N1 SM information, the PDU Session Establishment procedure that is initiated by the UE may be started. The PDU Session Establishment Request message may include a Request type, an SSC mode, and a protocol configuration option.

In case the PDU Session Establishment is for configuring a new PDU session, the Request type indicates "initial access". However, in case an existing PDU session exists between the 3GPP access and the non-3GPP access, the Request type may indicate an "existing PDU session".

The NAS message being transmitted by the UE is encapsulated within an N2 message by the AN. The N2 message is transmitted to the AMF and may include user location information and access technique type information.
- The N1 SM information may include an SM PDU DN request container including information on a PDU session authentication performed by an external DN.

2) In case the request type indicates an "initial request", and in case the PDU session ID has not been used for the existing PDU session of the UE, the AMF may determine that the message corresponds to a request for a new PDU session.

If the NAS message does not include the S-NSSAI, the AMF may determine default S-NSSAI for the requested PDU session according to the UE subscription. The AMF may relate a PDU session ID with an ID of the SMF and may store the PDU session ID.

The AMF may select SMF.

3) The AMF may transmit Nsmf_PDUSession_CreateSMContext Request message or Nsmf_PDUSession_UpdateSMContext Request message to the selected SMF.

The Nsmf_PDUSession_CreateSMContext Request message may include SUPI, DNN, S-NSSAI(s), PDU Session ID, AMF ID, Request Type, PCF ID, Priority Access, N1 SM container, User location information, Access Type, PEI, GPSI, UE presence in LADN service area, Subscription For PDU Session Status Notification, DNN Selection Mode, and Trace Requirements. The SM container may include a PDU Session Establishment Request message.

The Nsmf_PDUSession_UpdateSMContext Request message may include SUPI, DNN, S-NSSAI(s), SM Context ID, AMF ID, Request Type, N1 SM container, User location information, Access Type, RAT type, and PEI. The N1 SM container may include a PDU Session Establishment Request message.

The AMF ID is used to identify the AMF serving the UE. The N1 SM information may include a PDU session establishment request message received from the UE.

4) The SMF transmits a Subscriber Data Request message to the UDM. The Subscriber Data Request message may include a subscriber permanent ID and DNN. The UDM may transmit a Subscription Data Response message to the SMF.

In the above-described step 3, in case the Request type indicates an "existing PDU session", the SMF determines that the corresponding request is caused by a handover between the 3GPP access and the non-3GPP access. The SMF may identify the existing PDU session based on the PDU session ID.

In case the SMF has not yet searched the SN-related subscription data for the UE that is related to the DNN, the SMF may request the subscription data.

The subscription data may include an authenticated Request type, an authenticated SSC mode, and information on a default QoS profile.

The SMF may verify whether or not the UE request follows the user subscription and local policy. Alternatively, the SMF may reject the UE request via NAS SM signaling (including the related SM rejection cause), which is forwarded (or transferred) by the AMF, and then the SMF may notify to the AMF that this shall be considered as a release of the PDU session ID.

5) The SMF transmits Nsmf_PDUSession_CreateSMContext Response message or Nsmf_PDUSession _UpdateSMContext Response message to the AMF.

The Nsmf_PDUSession_CreateSMContext Response message may include Cause, SM Context ID, or N1 SM container. The N1 SM container may include a PDU Session Reject.

In step 3 above, when the SMF has received the
Nsmf_PDUSession_CreateSMContext Request message and the SMF can process the PDU Session establishment request message, the SMF creates SM context and the SM context ID is delivered to the AMF.

6) Secondary authentication/authorization is optionally performed.

7a) If the dynamic PCC is used for the PDU session, the SMF selects the PCF.

7b) The SMF performs an SM policy association establishment procedure in order to establish an SM policy association with the PCF.

8) If the request type in step 3 indicates "initial request", the SMF selects the SSC mode for the PDU session. If step 5 is not performed, SMF may also select UPF. In case of the request type IPv4 or IPv6, the SMF may allocate an IP address/prefix for the PDU session.

9) The SMF provides information on the policy control request trigger condition by performing the SM policy association modification procedure.

10) If the request type indicates "initial request", the SMF may start the N4 session establishment procedure using the selected UPF, otherwise may start the N4 session modification procedure using the selected UPF.

10a) The SMF transmits an N4 Session Establishment/Modification request message to the UPF. And, the SMF may provide packet discovery, execution, and reporting rules of packets that are to be installed in the UPF for the PDU session. In case the SMF allocates CN tunnel information, the CN tunnel information may be provided to the UPF.

10b) By transmitting an N4 Session Establishment/Modification response message, the UPF may respond. In case the CN tunnel information is allocated by the UPF, the CN tunnel information may be provided to the SMF.

11) The SMF transmits Namf_Communication _N1N2MessageTransfer message to the AMF. The Namf_Communication_N1N2MessageTransfer message may include PDU Session ID, N2 SM information, and N1 SM container.

The N2 SM information may include PDU Session ID, QoS Flow ID (QFI), QoS Profile(s), CN Tunnel Info, S-NSSAI from the Allowed NSSAI, Session-AMBR, PDU Session Type, User Plane Security Enforcement information, UE Integrity Protection Maximum Data Rate.

The N1 SM container may include a PDU session establishment accept message.

The PDU session establishment accept message may include an allowed QoS rule, SSC mode, S-NSSAI, and an assigned IPv4 address.

12) The AMF transmits an N2 PDU Session Request message to the RAN. The message may include N2 SM information and an NAS message. The NAS message may include a PDU session ID and a PDU Session Establishment Accept message.

The AMF may transmit an NAS message including a PDU session ID and a PDU Session Establishment Accept message. Additionally, the AMF may include the N2 SM information received from the SMF in the N2 PDU Session Request message and may then transmit the message including the N2 SM information to the RAN.

13) The RAN may perform a specific signaling exchange with a UE being related to the information received from the SMF.

The RAN also allocates RAN N3 tunnel information for the PDU session.

The RAN forwards the NAS message, which is provided in the step 10. The NAS message may include a PDU session ID and N1 SM information. The N1 SM information may include a PDU Session Establishment Accept message.

The RAN transmits the NAS message to the UE only in a case where a needed RAN resource is configured and allocation of RAN tunnel information is successful.

14) The RAN transmits an N2 PDU Session Response message to the AMF. The message may include a PDU session ID, a cause, and N2 SM information. The N2 SM information may include a PDU session ID, (AN) tunnel information, and a list of allowed/rejected QoS profiles.
- The RAN tunnel information may correspond to an access network address of an N3 tunnel corresponding to the PDU session.

15) The AMF may transmit Nsmf_PDUSession_UpdateSMContext Request message to the SMF. The Nsmf_PDUSession_UpdateSMContext Request message may include N2 SM information. Herein, the AMF may forward the N2 SM information received from the RAN to the SMF.

16a) If an N4 session for the PDU session has not already been configured, the SMF may start an N4 Session Establishment procedure along with the UPF. Otherwise, the SMF may use the UPF to start an N4 Session Modification procedure. The SMF may provide AN tunnel information and CN tunnel information. The CN tunnel information shall be provided only in a case where the SMF selects the CN tunnel information in the step 8.

16b) The UPF may transmit an N4 Session Modification Response message to the SMF.

17) The SMF transmits Nsmf_PDUSession_UpdateSMContext Response message to the AMF.

After this step, the AMF can deliver the related event to the SMF.

18) The SMF transmits Nsmf_PDUSession_SMContextStatusNotify message.

19) The SMF transmits information to the UE through the UPF. More specifically, in case of PDU Type IPv6, the SMF may generate an IPv6 Router Advertisement and may transmit the generated advertisement to the UE through the N4 and UPF.

20) During the procedure, if the PDU Session Establishment is not successful, the SMF notifies this to the AMF.

### <LADN (Local Area Data Network)>

In the next-generation (i.e., fifth-generation) mobile communication, it is considered to provide local services (or specialized services for each geographic area). In the next-generation mobile communication, such a local service is being referred to as LADN.

FIG. 9 shows an example of a LADN service.

As can be seen with reference to FIG. 9, when the UE is located in a predetermined service area, the UE may be provided with a LADN service. To this end, when the UE enters the predetermined service area, it may create a Packet Data Unit (PDU) session for the LADN.

When the UE enters an area accessible to the LADN, the AMF may provide LADN information to the UE. The UE may create a PDU session for LADN based on the LADN information. If the UE leaves the LADN area, the network may release the corresponding PDU session or release the resource of the user plane.

### <NWADAF (Network Data Analytics Function)>

The NWDAF supporting UE mobility statistics or analytics may collect UE mobility related information from Network Function (NF) and Operations, Administration and Maintenance (OAM), and may generate UE mobility statistics or predictions through data analytics.

The service provided by the NWDAF may be used by, e.g., the AMF among several NFs.

FIG. 10 is an exemplary diagram illustrating a signal flow for the operation of the NWDAF.

The NWDAF may provide UE mobility related analytics in the form of statistics or predictions. In FIG. 10, it is shown that the Application Function (AF) is an NF provided with a service from the NWDAF. The AF may request analytics via the NEF, and the NEF may provide the request to the NWDAF.
1) The NF may send a request message to the NWDAF for analytics on a specific UE or a group of UEs. The message may be, e.g., a message based on Nnwdaf_AnalyticsInfo or Nnwdaf_AnalyticsSubscription service. The NF may request statistics or predictions. The type of analytics may be UE mobility information. The NF may provide the UE id or the internal group ID in the target of the analytics reporting.
2) If the request is authorized and in order to provide the requested analytics, the NWDAF may subscribe to events with all the serving AMFs for notification of UE's location change. If the NWDAF has already completed the analysis, this step may not be performed.

The NWDAF subscribes the service data from to the AF. For this, a message based on Naf_EventExposure_Subscribe or Nnef_EventExposure_Subscribe service may be used.

The NWDAF collects UE mobility information from the OAM.

The NWDAF selects the AMF responsible for the UE or group of UEs.

3) The NWDAF performs the requested analytics.

4) The NWDAF provides the requested UE mobility analytics to the NF. For this, a response message to Nnwdaf_AnalyticsInfo_Reques or a Nnwdaf_ AnalyticsSubscription_Notify message may be used.

5-6) if the NF has subscribed to receive notifications for UE mobility analytics, the NWDAF may generate analytics and provide them to the NF.

The disclosures of the present specification provide methods for solving the above-described problems.

### <Problems to be solved by the disclosures of the present specification>

Research is underway to perform network automation by utilizing the information analytics/prediction function of the NWDAF, and efforts are underway to effectively provide Mobile Edge Computing (MEC) service. Among the multiple MEC enablers of 5GS, when performing LADN service, there is a method of managing the User Plane (UP) connection of the PDU session by the static operator policy, but there is a problem that dynamic UP connection management is impossible according to the real-time network and information of the UE. However, in the case of 5G service, more UEs than 4G utilize more network resources to receive real-time service, so judgment for information analytics/resource management is important.

### I. Overview of the disclosures of the present specification

### I-1. Function of the first network node (e.g., NWDAF)

According to the disclosure of the present specification, the NWDAF may obtain the location information of the UE (may include not only individual UEs but also UEs in a specific area or a group of UEs) and the presence information of the UE in the service area (e.g., LADN service area) from the network nodes, e.g., the AMF and SMF.

According to the disclosure of the present specification, the NWDAF may obtain information about a specific service area (e.g., LADN service area) and the number of times/statistical information that the PDU session is deactivated and then activated again in the specific service area from the network nodes, e.g., the SMF.

According to the disclosure of the present specification, the NWDAF may analyze the number of times/statistical information that the UE re-enters a specific service area (e.g., LADN service area) and the probability/prediction value of the UE re-entering a specific service area.

The NWDAF transmits the analyzed statistics and predictions to the network node, in particular, the SMF.

### I-2. Function of the second network node (e.g., SMF)

According to the disclosure of the present specification, the SMF may obtain information about statistics and predictions that a UE (may include not only individual UEs but also UEs in a specific area or a group of UEs) re-entered the LADN service area from an analytics node (e.g., the NWDAF) of the network.

According to the disclosure of the present specification, the SMF determines the management of the LADN PDU session by using the obtained information. That is, the SMF determines whether to immediately release the PDU session or to perform deactivation in which only the UP resource is released while maintaining the PDU session.

In the past, when the immediate release of the PDU session was determined, the SMF transmits a session release message to the UPF and the UE. However, when UP deactivation is determined, the SMF may transmit a message for releasing resources of the corresponding PDU session to the UPF and the NG-RAN (for reference, the message delivered to the UE and the NG-RAN may go via the AMF).

### II. Implementation examples

In the present specification, a specific service area is used as the LADN service area, and the embodiment of the UE presence pattern moving in and out of the area section/range has been mainly described, but it may be extended and applied to an allowed area or an any area of interest used in 5GS. Therefore, according to data analytics information such as the number/percentage/probability of the number of times/percentage/probability of the UE re-entering(/being to re-enter) the corresponding area, it may be extended and applied to determining management of all or specific sessions of the UE as well as the LADN session (e.g., releases the PDU session immediately or deactivation procedure of PDU session that releases only UP resources and maintains the PDU session).

According to the description below, UP optimization may be performed for edge computing. This may support he efficient UP resource usage through edge computing, or in case of LADN, UE presence pattern analytics.

The SMF may take actions (e.g., release the PDU session immediately or deactivate the user plane connection with maintaining the PDU session) based on operator's policy by using the notification message about the UE presence in LADN service area notified by the AMF. According to the description below, the NWDAF may transmit UE presence pattern analytics to the SMF for edge computing or LADN service.

The NWDAF supporting UE presence pattern analytics may perform the following operations.
- Colleting UE mobility related information in LADN service area from NFs (e.g., AMF, AF) and OAM
- Collecting LADN service area information from NF (e.g., AMF) and OAM;
- Collecting LADN PDU session related information from NF (e.g., SMF) and OAM
- Performing data analytics to provide UE presence pattern statistics or predictions.

The NWDAF service may be provided by an NF (SMF).

The NF includes Analytics ID = "UE Presence Pattern" and Analytics filter information and may include the following in the request message to receive the service:
information about whether the target of analytics reporting is a single UE, any UE, or a group of UEs

The Analytics filter information includes DNN and may optionally include one of the following:.
- area of interest
- S-NSSAI;
- Analysis target period: This may indicate the time period over which statistics or predictions are requested.

### II-1. Input data

The NWDAF supporting data analytics on UE presence pattern may collect UE mobility information from OAM, 5GC and AFs, and service data from AF. In addition, the NWDAF may collect LADN service area information from NF (e.g., AMF) and OAM, and LADN PDU session related information from NF (e.g., SMF) and OAM.

**[Table 4]**

| Information | | Source | Description |
|---|---|---|---|
| UE ID | | AMF | SUPI(Subscription Permanent Identifier) |
| UE locations (1..max) | | AMF | UE positions |
| | >UE location | | TA or cells that the UE enters |
| | >Timestamp | | A time stamp when the AMF detects the UE enters this location |
| Type Allocation code (TAC) | | AMF | To indicate the terminal model and vendor information of the UE. The UEs with the same TAC may have similar mobility behavior. |
| UE Presence | | AMF, SMF | UE presence in LADN service area |
| | >DNN | | Data Network Name associated for LADN service |
| >UE Presence [IN, OUT, UNKNOWN] | | | UE Presence in LADN service area |
| | >Timestamp | | A time stamp when the AMF or SMF detects the UE is determined as this presence. |

The table below shows service data from AF related to UE mobility.

**[Table 5]**

| Information | | Description |
|---|---|---|
| UE ID | | Could be external UE ID (i.e. GPSI) |
| Application ID | | Identifying the application providing this information |
| UE trajectory (1..max) | | Timestamped UE positions |
| | >UE location | Geographical area that the UE enters |
| | >Timestamp | A time stamp when UE enters this area |

Additionally, LADN service area information and LADN PDU session information may be required as input information.

The table below shows LADN service area information.

**[Table 6]**

| Information | Source | Description |
|---|---|---|
| DNN | AMF or OAM | Data Network Name where PDU connectivity service is provided |
| Service area | AMF or OAM | A set of Tracking Areas (Tas) associated by a specific DN |

The table below shows LADN PDU session information.

**[Table 7]**

| Information | Source | Description |
|---|---|---|
| DNN | SMF | Data Network Name associated for LADN service |
| UP activation | SMF | Ratio of successful activation from PDU session deactivation |

When extended/applied to the allowed area, the allowed area information per UE is used instead of the LADN service area information.

When extended/applied to an any area of interest, specific area information per UE and/or per DNN is used.

### II-2. Output analytics

The NWDAF supporting data analytics on UE presence pattern provides UE presence pattern analytics on returning back LADN service area to the NF (SMF).

The table below shows UE presence pattern statistics in LADN service area.

**[Table 8]**

| Information | | | Description |
|---|---|---|---|
| UE group ID or UE ID, any UE | | | Identifies a UE, any UE, or a group of UEs |
| DNN | | | Data network name associated for LADN service |
| Time slot entry (1..max) | | | List of time slots during the analytics target period |
| | > Time slot start | | Time slot start within the analytics target period |
| | > Duration | | Duration of the time slot |
| | > UE Presence Pattern (1..max) | | Observed location statistics |
| | | >> Ratio [0,max] | Percentage on which UE, any UE, or UE group comes in a LADN service area again. |

The table below shows UE presence pattern predictions in LADN service area.

**[Table 9]**

| Information | | | Description |
|---|---|---|---|
| UE group ID or UE ID, any UE | | | Identifies a UE or, any UE, a group of UEs |
| DNN | | | Data Network Name associated for LADN service |
| Time slot entry (1..max) | | | List of predicted time slots |
| | >Time slot start | | Time slot start time within the Analytics target period |
| | > Duration | | Duration of the time slot |
| | > UE Presence Pattern (1..max) | | Predicted UE presence during the analytics target period |
| | | >> Ratio [0, max] | Percentage on which the UE, any UE, or UE group may come in a LADN service area again. |
| | | >> Confidence | Confidence of this prediction |

The format of information included in UE presence pattern statistics or UE presence pattern predictions is not limited to the above-mentioned examples, and may be extended to various formats. For example, as shown below, the UE presence pattern may be most simply expressed as a binary such as [0, 1] or [IN, OUT] for the UE movement to a specific service area, or may be expressed as a number such as [0, max] for the frequency of re-entering a specific service area (the number of re-entering into the service area).

The table below shows UE presence statistics in LADN service area.

**[Table 10]**

| Information | | | Description |
|---|---|---|---|
| UE group ID or UE ID, any UE | | | Identifies a UE, any UE, or a group of UEs, e.g., internal group ID or SUPI |
| DNN | | | Data network name associated for LADN service |
| Time slot entry (1..max) | | | List of time slots during the analytics target period |
| | > Time slot start | | Time slot start within the analytics target period |
| | > Duration | | Duration of the time slot |
| | > UE Presence Pattern (1..max) | | Observed location statistics |
| | | >> Presence [1, 0] or [IN,OUT] | UE Presence where UE, any UE, or UE group comes in a LADN service area again. |

The table below shows UE presence statistics in LADN service area.

**[Table 11]**

| Information | | | Description |
|---|---|---|---|
| UE group ID or UE ID, any UE | | | Identifies a UE, any UE, or a group of UEs, e.g., internal group ID or SUPI |
| DNN | | | Data network name associated for LADN service |
| Time slot entry (1..max) | | | List of time slots during the analytics target period |
| | > Time slot start | | Time slot start within the analytics target period |
| | > Duration | | Duration of the time slot |
| | > UE Presence Pattern (1..max) | | Observed location statistics |
| | | >> Count [0, max] | The number of UE presence where UE, any UE, or UE group comes in a LADN service area again. |

When extended/applied to the allowed area or any area of interest, information may be analyzed per UE and/or per DNN rather than per DNN. Data analytics may be generated based on the number/percentage/probability of the UE coming back (/coming in) to the corresponding area instead of the LADN service area.

### II-3. Procedures

An analytics procedure on UE presence pattern in LADN service area will be described below. The NWDAF provides UE presence pattern related analytics in LADN service area, in the form of statistics or predictions.

FIG. 11 is a signal flow diagram illustrating an example of providing UE presence pattern analytics in LADN service area to NF.
1) The NF sends a request message to the NWDAF for analytics on a specific UE or a group of UEs. The message may be a message based on the Nnwdaf_AnalyticsInfo or Nnwdaf_AnalyticsSubscription service. The NF may request statistics or predictions. The type of analytics is UE presence pattern information. The NF may provide the UE id or Internal Group ID in the target of analytics reporting. Analytics filter information contains LADN DNN and may optionally contain S-NSSAI, area of interest.
2) If the request is authorized, and in order to provide the requested analytics, the NWDAF may subscribe to events with all the serving AMFs for notification of location changes of UEs, and may subscribe to events with SMFs serving LADN PDU session for notification of UE presence pattern in LADN service area.

The NWDAF may subscribe the service data from AF by invoking Naf_EventExposure_Subscribe service or Nnef_EventExposure_Subscribe.

The NWDAF may collect UE mobility information and/or LADN related information from OAM.

This step may be skipped when, e.g., the NWDAF already has the requested analytics available.

3) The NWDAF performs analysis for the requested analytics.

4) The NWDAF provides requested UE presence pattern analytics to the NF. For this, the Nnwdaf_AnalyticsInfo_Request response message or
Nnwdaf_AnalyticsSubscription_Notify message may be used.

5-7) If at step 1, the NF has requested UE presence pattern analytics, after receiving event notification message from the AMFs, AFs and OAM, the NWDAF may perform analytics and provides analytics results to the NF.

The SMF intending to use the above analytics results uses the UE presence pattern analytics to make decision how to handle LADN PDN session. For example, when the UE presence pattern in a LADN service area is OUT, the SMF may determine whether to release the PDU session immediately, or deactivate the user plane connection for the PDU session with maintaining the PDU session.

Nodes that impact services and interfaces due to the content proposed above will be described.

First, the impact on the SMF is as follows.

The SMF gets information from the NWDAF to make decision how to handle LADN PDN session (e.g., either one of the following two operations) when the UE presence pattern in LADN service area is OUT.
(1) release the PDU session immediately; or
(2) deactivate the user plane connection for the PDU session with maintaining the PDU session

Next, the impact on the NWDAF is as follows.

The NWDAF may use LADN service area information and LADN PDU session information with UE mobility related analytics.

The NWDAF may perform UE presence pattern statistics and predictions.

In the present specification, for the Nnwdaf service operation used in the above procedure, an example of adding "UE Presence Pattern information" to the analytics information provided by the NWDAF as follows will be described.

The services provided to the NF by the NWDAF are shown in the table below.

**[Table 12]**

| Service Name | Service Operations | Operation Semantics | Example Consumer(s) |
|---|---|---|---|
| Nnwdaf_AnalyticsSubscription | Subscribe | Subscribe / Notify | PCF, NSSF, AMF, SMF, NEF, AF |
| | Unsubscribe | | PCF, NSSF, AMF, SMF, NEF, AF |
| | Notify | | PCF, NSSF, AMF, SMF, NEF, AF |
| Nnwdaf_AnalyticsInfo | Request | Request / Response | PCF, NSSF, AMF, SMF, NEF, AF |

The following table shows the analytics information provided by the NWDAF:

**[Table 13]**

| Analytics Information | Request Description | Response Description |
|---|---|---|
| Slice Load level information | Analytics ID: load level information | Load level of a network slice instance reported either as notification of crossing of a given threshold or as periodic notification (if no threshold is provided). |
| Observed Service experience information | Analytics ID: Service Experience | Observed Service experience statistics or predictions may be provided for a Network Slice instance or an Application. They may be derived from an individual UE, a group of UEs or any UE. For slice service experience, they may be derived from an application, a set of applications or all applications on the network slice instance. |
| NF Load information | Analytics ID: NF load information | Load statistics or predictions information for specific NF(s). |
| Network Performance information | Analytics ID: Network Performance | Statistics or predictions on the load in an Area of Interest; in addition, statistics or predictions on the number of UEs that are located in that Area of Interest. |
| UE mobility information | Analytics ID: UE Mobility | Statistics or predictions on UE mobility. |
| UE presence pattern information | Analytics ID: UE Presence Pattern | Statistics or predictions on returning back LADN service area |
| UE Communication information | Analytics ID: UE Communication | Statistics or predictions on UE communication. |
| Expected UE behavioural parameters | Analytics ID: UE Mobility and/or UE Communication | Analytics on UE mobility and/or UE Communication. |
| UE Abnormal behaviour information | Analytics ID: Abnormal behaviour | List of observed or expected exceptions, with exception ID, Exception Level and other information. |
| User Data Congestion information | Analytics ID: User Data Congestion | Statistics or predictions on the user data congestion for transfer over the user plane, for transfer over the control plane, or for both. |
| QoS Sustainability | Analytics ID: QoS Sustainability | For statistics, the information on the location and the time for the QoS change and the threshold(s). |

Meanwhile, an example in which the analytics are utilized will be described as follows.

The analytics may be used when establishing and modifying a PDU session.

The analytics may be used when releasing a PDU session (which has already been created).

The analytics may be used when deactivating an active PDU session.

The analytics may be used when activating a PDU session in an inactive state.

All of the above cases may be extended and applied to all cases of checking whether the request is for a PDU session in a valid area as well as in LADN (Apply by replacing the LADN area with the allowed area or the area of interest.)

### II-3-1. Changes in standard specification when applied to LADN

Based on the notification about the UE presence in LADN service area notified by AMF (e.g., IN, OUT, or UNKNOWN), the SMF may take actions as follows based on operator's policy and/or UE presence pattern analytics (In case of the deployment option using NWDAF).
i) When the SMF is informed that the UE presence in a LADN service area is OUT,
   - The SMF may release the PDU Session immediately; or
   - The SMF may deactivate the UP connection for the PDU session with maintaining the PDU session and ensure the data notification on arrival of downlink data is disabled. The SMF may release the PDU session if the SMF is not informed that the UE moves into the LADN service area after a period.
ii) When the SMF is informed that the UE presence in a LADN service area is IN,
   - The SMF may ensure that data notification on arrival of downlink data is enabled.
   - The SMF may trigger a service request procedure for a LADN PDU session to activate the UP connection when the SMF receives downlink data or data notification from the UPF.
iii) When the SMF is informed that the UE presence in a LADN service area is UNKNOWN,
   - The SMF may ensure that data notification is enabled.
   - The SMF may trigger a service request procedure for a LADN PDU session to activate the UP connection when the SMF receives downlink data or data notification from the UPF.

### II-3-2. Changes in standard specification for selective activation and deactivation of UP connection of PDU session

When using NWDAF, the SMF may decide independent activation and deactivation of UP connection of existing PDU session, based on UE presence pattern analytics.

FIG. 12 is an exemplary signal flow diagram illustrating a selective deactivation procedure of a UP connection of a PDU session.
1) The SMF may determine that the UP connection of the PDU session may be deactivated in following cases. Alternatively, when using the NWDAF, the SMF may consider UE presence pattern analytics to decide to deactivate the PDU session.
   - During handover procedure, if all the Quality of Service (QoS) flows of a PDU session are rejected by the target NG-RAN, or if a PDU session is failed to setup indicated by the AMF.
   - When the UPF detects that the PDU session has no data transfer for a specified inactivity period.
   - For a LADN PDU session, when the AMF notifies to the SMF that the UE moved out of the LADN service area.
   - When the AMF notifies to the SMF that the UE moved out of the allowed area
   The SMF may decide to release the UPF of N3 terminating point. In that case, the SMF proceeds with steps 2 and 3. Otherwise, if the SMF decides to keep the UPF of the N3 terminating points, the SMF may proceeds with step 4.
2) The SMF may initiate an N4 session release procedure to release the intermediate UPF of N3 terminating point. When there are multiple intermediate UPFs, this step may be repeatedly performed for each UPF to be released. The SMF may initiate an N4 session modification procedure to the UPF (i.e., N9 terminating point or PDU session anchor) connecting to the released UPF.
3) If the intermediate UPF of N3 terminating point is released in step 2, the SMF initiates the N4 session modification procedure towards the UPF connecting to the released UP, indicating the need to remove CN tunnel information for N9 tunnel of the PDU session. In this case, the UPF connecting to the released UPF may buffer, drop, or forward to the SMF the downlink data for the PDU session based on buffering instruction provided by the SMF. If the PDU session corresponds to a LADN, the SMF may notify the UPF connecting to the released UPF to discard downlink data for the PDU session or to not provide further data notification messages. If the PDU session corresponds to a LADN and the UE moved out of the LADN service area, the SMF may request the UPF connecting to the released UPF to discard downlink data for the PDU session and to not provide further data notification messages.

When using the NWDAF for LADN, the SMF may decide to deactivate the PDU session based on UE presence pattern analytics.

Otherwise, N4 session modification procedure may be performed for the N3 terminating point.

4) If the UPF of N3 terminating point is not released in step 2, the SMF may initiate an N4 session modification procedure indicating the need to remove AN tunnel information for N3 tunnel of the PDU session. The UPF connecting to the released UPF may buffer, drop, or forward to the SMF downlink data for the PDU session based on buffering instruction provided by the SMF. If the PDU session corresponds to a LADN, the SMF may notify the UPF connecting to the released UPF to discard downlink data for the PDU session or to not provide further data notification messages. If the PDU session corresponds to a LADN and the UE moved out of the LADN service area, the SMF may request the UPF connecting to the released UPF to discard downlink data for the PDU session and to not provide further data notification messages.

When using the NWDAF for LADN, the SMF may decide to deactivate the PDU session based on UE presence pattern analytics.

5) The SMF may transmit a Namf_Communication_N1N2MessageTransfer message to release the NG-RAN resources associated with the PDU session. The message may include a PDU session ID and N2 SM information. The N2 SM information may include an N2 resource release request. The N2 resource release request may include a PDU session ID.

6) The AMF may send an N2 PDU session resource release command including N2 SM information received from the SMF.

7) The NG-RAN may exchange NG-RAN specific signaling (e.g., RRC connection reconfiguration message) with the UE to release the NG-RAN resources related to the PDU session received from the AMF. When a User Plane connection for the PDU session is released, the access stratum (AS) layer in the UE indicates it to the NAS layer.

If the UE is in RRC inactive state, this step may be skipped. When the UE becomes RRC connected state from RRC inactive state, the NG-RAN and UE synchronize the released radio resources for the deactivated PDU session.

The NG-RAN acknowledges the N2 PDU Session resource release command to the AMF including N2 SM resource release Ack message. The N2 SM resource release Ack message may include user location information and secondary RAT usage data.

9) The AMF transmits the Nsmf_PDUSession_UpdateSMContext message in response to the reception of the message in step 5. The Nsmf_PDUSession_UpdateSMContext message may include N2 SM information. The N2 SM information may include secondary RAT usage data.

### II-3-3. Changes in standard specification for SMF

The SMF may perform several functionalities. Some or all of the SMF functionalities may be supported in a single instance of a SMF.
- The SMF may perform session management, e.g., session establishment, modify and release, including tunnel maintain between UPF and AN node. When using the NWDAF, the SMF may consider UE presence pattern analytics for session management.

### II-3-4. Changes in standard specification for UE requested PDU session establishment procedure

PDU session establishment may be performed in non-roaming and roaming with Local Breakout (LBO).
- a new PDU session may be established.
- A PDN connection in EPS may be handed over to PDU session in 5GS without N26 interface.
- A PDU session may be switched between non-3GPP access and 3GPP access.
- A PDU session may be requested for emergency services.
- When using the NWDAF, the SMF may consider UE presence pattern analytics in order to determine whether to accept the PDU session related request during above procedure.

Referring to FIGS. 8a and 8b for PDU session establishment, in step 4 of FIG. 8a, the SMF may determine whether to accept the PDU session establishment request based on the UE presence pattern analytics.

### II-3-5. Changes in standard specification for service request procedure

FIGS. 13a to 13c are exemplary signal flow diagrams illustrating a service request procedure.

The service request procedure may be initiated by a UE in CM-IDLE state to request the establishment of a secure connection to an AMF. The service request procedure may also be used both when the UE is in CM-IDLE and in CM-CONNECTED to activate a UP connection for an established PDU session.

When using the NWDAF, the SMF may consider UE presence pattern analytics to decide whether to activate a UP connection for an established PDU session.

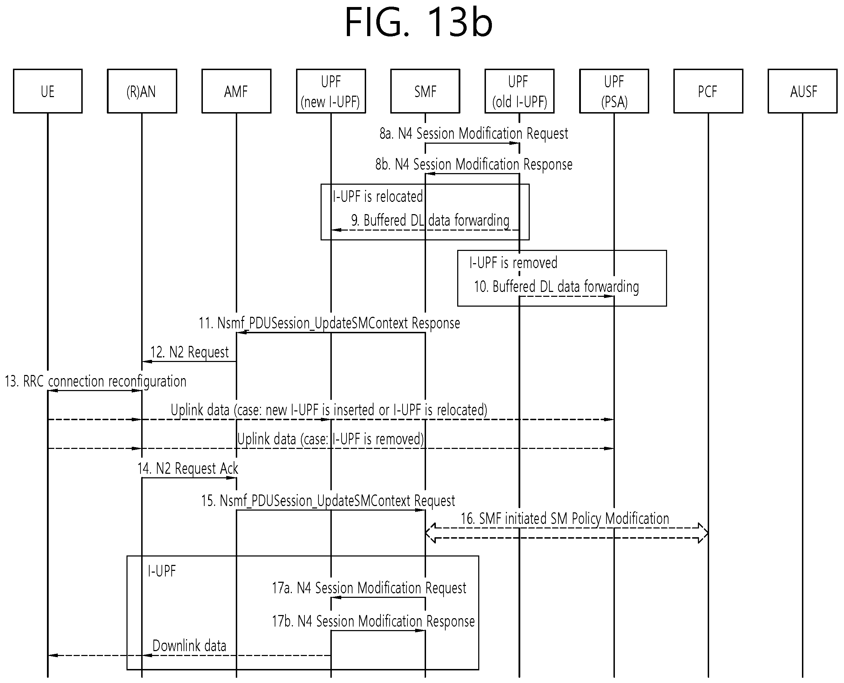

Referring to FIGS. 13a and 13b, in step 6, the SMF may determine whether to transmit a PDU session modification request message to the UPF for the purpose of activating the UP connection of an already established PDU session, based on the UE presence pattern analytics.

Hereinafter, an apparatus to which the above disclosures of the present specification can be applied will be described.

### III. Summary of the disclosures of the present specification

The first network control node (e.g., NWDAF) may collect and analyze information about the movement of the UE for a specific service area and utilization status of a specific PDU session.

The second network control node (e.g., SMF) may obtain the analyzed information and determine a UP resource management scheme of the PDU session.

FIG. 14 shows a block diagram of a processor in which the disclosure of the present specification is implemented.

As can be seen with reference to FIG. 14, a processor 1020 in which the disclosure of the present specification is implemented may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an Application-Specific Integrated Circuit (ASIC) or an Application Processor (AP), and includes at least one of a Digital Signal Processor (DSP), a Central Processing Unit (CPU), and a Graphics Processing Unit (GPU).

The processor may be included in the UE, the base station, the AMF or the SMF.

A case in which the processor is included in the SMF will be described.

The first circuit 1020-1 of the processor included in the SMF may obtain analytics information from a Network Data Analytics Function (NWDAF) node.

The obtained analytics information may include information about User Equipment (UE) presence pattern analytics within a local area data network (LADN) service area.

The second circuit 1020-2 of the processor included in the SMF may determine a procedure to be performed for a LADN PDU session, based on the information about the UE presence pattern analytics.

The procedure may include one or more of: a procedure for establishing the LADN PDU session; a procedure for releasing the LADN PDU session; a procedure for deactivating the PDU session, in order to release only UP resources while maintaining the PDU session; and a service request procedure

The procedure for establishing the LADN PDU session may include: receiving a PDU session establishment request message from the UE; and determining whether to accept the PDU session establishment request message, based on the information about the UE presence pattern analytics.

The procedure for deactivating the LADN PDU session may include: when it is checked that the UE leaves the LADN service area based on the UE presence pattern analytics, transmitting a message to request a corresponding User Plane Function (UPF) node to discard downlink data for the PDU session and not to transmit a data notification message thereafter.

The service request procedure may include: based on the PDU session having already been established, transmitting a PDU session modification request message to a UPF node for purpose of activating a User Plane (UP) connection of the PDU session.

The analytics information may include one or more of: UE presence pattern statistics information and UE presence pattern predictions information.

The UE presence pattern statistics information may include one or more of: a Data Network Name (DNN) associated with a LADN service; UE presence pattern information; and information about a percentage at which a UE, any UE or group of UEs come within the LADN service area.

The UE presence pattern predictions information may include one or more of: a Data Network Name (DNN) associated with a LADN service; a UE presence predicted within an analytics target period; and information about a percentage at which a UE, any UE or group of UEs come within the LADN service area.

FIG. 15 illustrates a wireless communication system according to an embodiment.

Referring to FIG. 15, the wireless communication system may include a first device 100a and a second device 100b.

The first device 100a may be a UE described in the disclosure of the present specification. Or, the first device 100a may be a base station, a network node, a transmission terminal, a reception terminal, a wireless device, a wireless communication device, a vehicle, a vehicle on which a self-driving function is mounted, a connected car, a drone (Unmanned Aerial Vehicle (UAV)), an Artificial Intelligence (AI) module, a robot, an Augmented Reality (AR) device, a Virtual Reality (VR) device, a Mixed Reality (MR) device, a hologram device, a public safety device, an MTC device, an IoT device, a medical device, a FinTech device (or financial device), a security device, a climate/environment device, a device related to 5G service or a device related to the fourth industrial revolution field.

The second device 100b may be a network node (e.g., AMF or MME) described in the disclosure of the present specification. Or, the second device 100b may be a base station, a network node, a transmission terminal, a reception terminal, a wireless device, a wireless communication device, a vehicle, a vehicle on which a self-driving function is mounted, a connected car, a drone (Unmanned Aerial Vehicle (UAV)), an Artificial Intelligence (AI) module, a robot, an Augmented Reality (AR) device, a Virtual Reality (VR) device, a Mixed Reality (MR) device, a hologram device, a public safety device, an MTC device, an IoT device, a medical device, a FinTech device (or financial device), a security device, a climate/environment device, a device related to 5G service or a device related to the fourth industrial revolution field.

For example, the UE may include a cellular phone, a smart phone, a laptop computer, a terminal for digital broadcasting, a Personal Digital Assistants (PDA), a Portable Multimedia Player (PMP), a navigation, a slate PC, a tablet PC, an ultrabook, a wearable device (e.g., a watch type terminal (smartwatch), a glass type terminal (smart glass), a Head Mounted Display (HMD)), and so on. For example, the HMD may be a display device of a form, which is worn on the head. For example, the HMD may be used to implement VR, AR or MR.

For example, the drone may be a flight vehicle that flies by a wireless control signal without a person being on the flight vehicle. For example, the VR device may include a device implementing the object or background of a virtual world. For example, the AR device may include a device implementing the object or background of a virtual world by connecting it to the object or background of the real world. For example, the MR device may include a device implementing the object or background of a virtual world by merging it with the object or background of the real world. For example, the hologram device may include a device implementing a 360-degree stereographic image by recording and playing back stereographic information using the interference phenomenon of a light beam generated when two lasers called holography are met. For example, the public safety device may include a video relay device or an imaging device capable of being worn on a user's body. For example, the MTC device and the IoT device may be a device that does not require a person's direct intervention or manipulation. For example, the MTC device and the IoT device may include a smart meter, a vending machine, a thermometer, a smart bulb, a door lock or a variety of sensors. For example, the medical device may be a device used for the purpose of diagnosing, treating, reducing, handling or preventing a disease. For example, the medical device may be a device used for the purpose of diagnosing, treating, reducing or correcting an injury or obstacle. For example, the medical device may be a device used for the purpose of testing, substituting or modifying a structure or function. For example, the medical device may be a device used for the purpose of controlling pregnancy. For example, the medical device may include a device for medical treatment, a device for operation, a device for (external) diagnosis, a hearing aid or a device for a surgical procedure. For example, the security device may be a device installed to prevent a possible danger and to maintain safety. For example, the security device may be a camera, CCTV, a recorder or a blackbox. For example, the FinTech device may be a device capable of providing financial services, such as mobile payment. For example, the FinTech device may include a payment device or Point of Sales (PoS). For example, the climate/environment device may include a device for monitoring or predicting the climate/environment.

The first device 100a may include at least one processor such as a processor 1020a, at least one memory such as memory 1010a, and at least one transceiver such as a transceiver 1031a. The processor 1020a may perform the above-described functions, procedures, and/or methods. The processor 1020a may perform one or more protocols. For example, the processor 1020a may perform one or more layers of a radio interface protocol. The memory 1010a is connected to the processor 1020a, and may store various forms of information and/or instructions. The transceiver 1031a is connected to the processor 1020a, and may be controlled to transmit and receive radio signals.

The second device 100b may include at least one processor such as a processor 1020b, at least one memory device such as memory 1010b, and at least one transceiver such as a transceiver 1031b. The processor 1020b may perform the above-described functions, procedures and/or methods. The processor 1020b may implement one or more protocols. For example, the processor 1020b may implement one or more layers of a radio interface protocol. The memory 1010b is connected to the processor 1020b, and may store various forms of information and/or instructions. The transceiver 1031b is connected to the processor 1020b and may be controlled transmit and receive radio signals.

The memory 1010a and/or the memory 1010b may be connected inside or outside the processor 1020a and/or the processor 1020b, respectively, and may be connected to another processor through various technologies, such as a wired or wireless connection.

The first device 100a and/or the second device 100b may have one or more antennas. For example, an antenna 1036a and/or an antenna 1036b may be configured to transmit and receive radio signals.

FIG. 16 illustrates a block diagram of a network node according to an embodiment.

In particular, FIG. 16 is a diagram illustrating in detail a case in which a base station is divided into a Central Unit (CU) and a Distributed Unit (DU).

Referring to FIG. 16, base stations W20 and W30 may be connected to a core network W10. The base station W30 may be connected to a neighbor base station W20. For example, an interface between the base stations W20 and W30 and the core network W10 may be referred to as an NG. An interface between the base station W30 and the neighbor base station W20 may be referred to as an Xn.

The base station W30 may be divided into a CU W32 and DUs W34 and W36. That is, the base station W30 may be hierarchically divided and operated. The CU W32 may be connected to one or more DUs W34 and W36. For example, an interface between the CU W32 and the DU W34, W36 may be referred to as an F1. The CU W32 may perform a function of higher layers of the base station. The DU W34, W36 may perform a function of lower layers of the base station. For example, the CU W32 may be a logical node that hosts Radio Resource Control (RRC), Service Data Adaptation Protocol (SDAP) and Packet Data Convergence Protocol (PDCP) layers of the base station (e.g., gNB). The DU W34, W36 may be a logical node that hosts Radio Link Control (RLC), Media Access Control (MAC) and physical (PHY) layers of the base station. Alternatively, the CU W32 may be a logical node that hosts RRC and PDCP layer of a base station (e.g., en-gNB).

An operation of the DU W34, W36 may be partially controlled by the CU W32. The one DU W34, W36 may support one or more cells. One cell may be supported by only the one DU W34, W36. The one DU W34, W36 may be connected to the one CU W32, and the one DU W34, W36 may be connected to a plurality of CUs by a proper implementation.

FIG. 17 is a block diagram illustrating a configuration of a UE according to an embodiment.

In particular, the UE 100 shown in FIG. 17 is a diagram illustrating the first device of FIG. 15 in more detail.

A UE includes a memory 1010, a processor 1020, a transceiver 1031, a power management module 1091, a battery 1092, a display 1041, an input unit 1053, a speaker 1042, a microphone 1052, a Subscriber Identification Module (SIM) card, and one or more antennas.

The processor 1020 may be configured to implement the proposed function, process and/or method described in the present disclosure. Layers of a wireless interface protocol may be implemented in the processor 1020. The processor 1020 may include Application-Specific Integrated Circuit (ASIC), other chipset, logical circuit and/or data processing apparatus. The processor 1020 may be an Application Processor (AP). The processor 1020 may include at least one of a Digital Signal Processor (DSP), a Central Processing Unit (CPU), a Graphics Processing Unit (GPU) and a Modulator and Demodulator (Modem). An example of the processor 1020 may be SNAPDRAGON^{™} series processor manufactured by Qualcomm^{®}, EXYNOS^{™} series processor manufactured by Samsung^{®}, A series processor manufactured by Apple^{®}, HELIO^{™} series processor manufactured by MediaTek^{®}, ATOM^{™} series processor manufactured by INTEL^{®}, or the corresponding next generation processor.

The power management module 1091 manages a power for the processor 1020 and/or the transceiver 1031. The battery 1092 supplies power to the power management module 1091. The display 1041 outputs the result processed by the processor 1020. The input unit 1053 receives an input to be used by the processor 1020. The input unit 1053 may be displayed on the display 1041. The SIM card is an integrated circuit used to safely store International Mobile Subscriber Identity (IMSI) used for identifying a subscriber in a mobile telephoning apparatus such as a mobile phone and a computer and the related key. Many types of contact address information may be stored in the SIM card.

The memory 1010 is operably coupled with the processor 1020 and stores various types of information to operate the processor 1020. The memory may include Read-Only Memory (ROM), Random Access Memory (RAM), flash memory, a memory card, a storage medium, and/or other storage device. When the embodiment is implemented in software, the techniques described in the present disclosure may be implemented in a module (e.g., process, function, etc.) for performing the function described in the present disclosure. A module may be stored in the memory 1010 and executed by the processor 1020. The memory may be implemented inside of the processor 1020. Alternatively, the memory 1010 may be implemented outside of the processor 1020 and may be connected to the processor 1020 in communicative connection through various means which is well-known in the art.

The transceiver 1031 is operably connected to the processor 1020 and transmits and/or receives a radio signal. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives a sound related input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 such that a user identifies it or for convenience.

FIG. 18 is a detailed block diagram illustrating the transceiver of the first device shown in FIG. 15 or the transceiver of the device shown in FIG. 17 in detail.

Referring to FIG. 18, the transceiver 1031 includes a transmitter 1031-1 and a receiver 1031-2. The transmitter 1031-1 includes a Discrete Fourier Transform (DFT) unit 1031-11, a subcarrier mapper 1031-12, an Inverse Fast Fourier Transform (IFFT) unit 1031-13 and a CP insertion unit 1031-14, and a radio transmitter 1031-15. The transmitter 1031-1 may further include a modulator. In addition, for example, a scramble unit (not shown), a modulation mapper (not shown), a layer mapper (not shown) and a layer permutator (not shown) may be further included and may be disposed before the DFT unit 1031-11. That is, in order to prevent an increase in the Peak-to-Average Power Ratio (PAPR), the transmitter 1031-1 passes information through the DFT 1031-11 before mapping a signal to a subcarrier. After subcarrier mapping, by the subcarrier mapper 1031-12, of the signal spread (or precoded in the same sense) by the DFT unit 1031-11, a signal on the time axis is made through the IFFT unit 1031-13.

The DFT unit 1031-11 outputs complex-valued symbols by performing DFT on input symbols. For example, when Ntx symbols are input (Ntx is a natural number), the DFT size is Ntx. The DFT unit 1031-11 may be referred to as a transform precoder. The subcarrier mapper 1031-12 maps the complex symbols to each subcarrier in the frequency domain. The complex symbols may be mapped to resource elements corresponding to resource blocks allocated for data transmission. The subcarrier mapper 1031-12 may be referred to as a resource element mapper. The IFFT unit 1031-13 outputs a baseband signal for data that is a time domain signal by performing IFFT on an input symbol. The CP insertion unit 1031-14 copies a part of the rear part of the baseband signal for data and inserts it in the front part of the baseband signal for data. Inter-Symbol Interference (ISI) and Inter-Carrier Interference (ICI) are prevented through CP insertion, so that orthogonality can be maintained even in a multi-path channel.

On the other hand, the receiver 1031-2 includes a radio receiver 1031-21, a CP remover 1031-22, an FFT unit 1031-23, and an equalizer 1031-24, etc. The radio receiver 1031-21, the CP removing unit 1031-22, and the FFT unit 1031-23 of the receiver 1031-2 performs the reverse function of the radio transmitter 1031-15, the CP insertion unit 1031-14 and the IFFT unit 1031-13 of the transmitter 1031-1. The receiver 1031-2 may further include a demodulator.

### <Scenario to which the disclosure of the present specification can be applied>

Although not limited thereto, various descriptions, functions, procedures, suggestions, methods and/or operational flowcharts of the disclosures of the present specification disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

FIG. 19 illustrates a communication system 1 applied to the disclosure of the present specification.

Referring to FIG. 19, the communication system 1 applied to the disclosure of the present specification includes a wireless device, a base station, and a network. Here, the wireless device refers to a device that performs communication using a radio access technology (e.g., 5G New RAT (NR)), Long-Term Evolution (LTE)), and may be referred to as a communication/wireless/5G device. Although not limited thereto, the wireless device may include a robot 100a, a vehicle 100b-1, 100b-2, an eXtended Reality (XR) device 100c, a hand-held device 100d, and a home appliance 100e, an Internet-of-Things (IoT) device 100f, and an AI device/server 400. For example, the vehicle may include a vehicle equipped with a wireless communication function, an autonomous driving vehicle, a vehicle capable of performing inter-vehicle communication, and the like. Here, the vehicle may include an Unmanned Aerial Vehicle (UAV) (e.g., a drone). XR devices include Augmented Reality (AR)/Virtual Reality (VR)/Mixed Reality (MR) devices, and may be implemented in the form of a Head-Mounted Device (HMD), a Head-Up Display (HUD) provided in a vehicle, a television, a smartphone, a computer, a wearable device, a home appliance, a digital signage, a vehicle, a robot, and the like. The hand-held device may include a smartphone, a smart pad, a wearable device (e.g., a smart watch, smart glasses), a computer (e.g., a laptop computer), and the like. Home appliances may include a TV, a refrigerator, a washing machine, and the like. The IoT device may include a sensor, a smart meter, and the like. For example, the base station and the network may be implemented as a wireless device, and the specific wireless device 200a may operate as a base station/network node to other wireless devices.

The wireless devices 100a to 100f may be connected to the network 300 via the base station 200. An Artificial Intelligence (AI) technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the base stations 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., Vehicle-to- Vehicle (V2V)/Vehicle-to-Everything (V2X) communication). The IoT device (e.g., a sensor) may perform direct communication with other IoT devices (e.g., sensors) or other wireless devices 100a to 100f.

Wireless communication/connections 150a, 150b and 150c may be established between wireless device 100a to 100f and base station 200, between base station 200/ base station 200. Herein, the wireless communication/connections may be established through various RATs (e.g., 5G NR) such as uplink/downlink communication 150a, sidelink communication (or Device-to-Device (D2D) communication) 150b, inter-base station communication 150c (e.g., relay, Integrated Access and Backhaul (IAB)), etc. The wireless devices 100a to 100f and the base station 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

In the above, preferred embodiments have been exemplarily described, but the disclosure of the present specification is not limited to such specific embodiments. Therefore, the disclosure of the present specification may be modified, changed, or improved in various forms within the present specification and the scope set forth in the claims.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

## Claims

1. A method performed by a Session Management Function, SMF, (42) the method comprising:
transmitting a request for analytics information on a specific User Equipment, UE, (10, 100) or a group of UEs (10, 100) to a Network Data Analytics Function, NWDAF,
wherein the request includes i) an analytics identifier, ID, and ii) analytics filter information, and
wherein the analytics filter information includes a Local Area Data Network, LADN, Data Network Name, DNN for a LADN service area;
obtaining the analytics information from the NWDAF in response to the request; and
determining whether to perform a first procedure or a second procedure for a LADN Protocol Data Unit, PDU, session, based on the analytics information,
wherein the first procedure is a procedure for releasing the LADN PDU session,
wherein the second procedure is a procedure for deactivating the LADN PDU session in which a user plane resource is released while maintaining the LADN PDU session,
wherein the analytics ID is set to UE Presence Pattern, and
wherein the analytics information is related to a UE presence pattern in the LADN service area.

2. The method of claim 1, wherein the second procedure comprises:
receiving a notification that a UE (10, 100) moved out of the LADN service area from an Access and mobility Management Function, AMF (41).

3. The method of claim 2, wherein the second procedure comprises:
based on the UE (10, 100) moving out of the LADN service area, transmitting a message to request a corresponding User Plane Function, UPF, (44) to discard downlink data for the LADN PDU session and not to transmit further data notification messages.

4. The method of claim 3, wherein the second procedure comprises:
transmitting a first message to the AMF (41) to release Next Generation, NG,-Radio Access Network, RAN, resources associated with the LADN PDU session, wherein the first message includes a PDU session ID and N2 Session Management, SM, information, wherein the N2 SM information includes an N2 resource release request, and wherein the N2 resource release request includes a PDU session ID; and
receiving a second message in response to the first message from the AMF (41), wherein the second message includes N2 SM information, and wherein the N2 SM information includes secondary Radio Access Technology, RAT, usage data.

5. The method of any claims 1 to 4, wherein the analytics information includes UE presence pattern information within the LADN service area, and
wherein the UE presence pattern information includes one or more of UE presence pattern statistics information and UE presence pattern predictions information.

6. The method of claim 5, wherein the UE presence pattern statistics information includes one or more of:
a DNN associated with a LADN service;
UE presence pattern information; and
information about a percentage at which a UE (10, 100), any UE (10, 100) or group of UEs (10, 100) come within the LADN service area.

7. The method of claim 5, wherein the UE presence pattern predictions information includes one or more of:
a DNN associated with a LADN service;
a UE presence predicted within an analytics target period; and
information about a percentage at which a UE (10, 100), any UE (10, 100) or group of UEs (10, 100) come within the LADN service area.

8. A chipset mounted on a Session Management Function, SMF, (42) the chipset comprising:
at least one processor (1020); and
at least one memory for storing instructions and operably electrically connectable to the at least one processor (1020), wherein the instructions, based on being executed by the at least one processor (1020), perform operations comprising:
transmitting a request for analytics information on a specific User Equipment, UE, (10, 100) or a group of UEs (10, 100) to a Network Data Analytics Function, NWDAF,
wherein the request includes i) an analytics identifier, ID, and ii) analytics filter information, and
wherein the analytics filter information includes a Local Area Data Network, LADN, Data Network Name, DNN for a LADN service area;
obtaining the analytics information from the NWDAF in response to the request; and
determining whether to perform a first procedure or a second procedure for a LADN Protocol Data Unit, PDU, session, based on the analytics information,
wherein the first procedure is a procedure for releasing the LADN PDU session,
wherein the second procedure is a procedure for deactivating the LADN PDU session in which a user plane resource is released while maintaining the LADN PDU session,
wherein the analytics ID is set to UE Presence Pattern, and
wherein the analytics information is related to a UE presence pattern in the LADN service area.

9. The chipset of claim 8, wherein the second procedure comprises:
receiving a notification that a UE (10, 100) moved out of the LADN service area from an Access and mobility Management Function, AMF (41).

10. The chipset of claim 9, wherein the second procedure comprises:
based on the UE (10, 100) moving out of the LADN service area, transmitting a message to request a corresponding User Plane Function, UPF, (44) to discard downlink data for the LADN PDU session and not to transmit further data notification messages.

11. The chipset of claim 10, wherein the second procedure comprises:
transmitting a first message to the AMF (41) to release Next Generation, NG,-Radio Access Network, RAN, resources associated with the LADN PDU session, wherein the first message includes a PDU session ID and N2 Session Management, SM, information, wherein the N2 SM information includes an N2 resource release request, and wherein the N2 resource release request includes a PDU session ID; and
receiving a second message in response to the first message from the AMF (41), wherein the second message includes N2 SM information, and wherein the N2 SM information includes secondary Radio Access Technology, RAT, usage data.

12. A device for a Session Management Function, SMF, (42) the device comprising:
at least one transceiver;
at least one processor (1020); and
at least one memory for storing instructions and operably electrically connectable to the at least one processor (1020),
wherein the instructions, based on being executed by the at least one processor (1020), cause the device to perform operations comprising:
transmitting a request for analytics information on a specific User Equipment, UE, (10, 100) or a group of UEs (10, 100) to a Network Data Analytics Function, NWDAF,
wherein the request includes i) an analytics identifier, ID, and ii) analytics filter information, and
wherein the analytics filter information includes a Local Area Data Network, LADN, Data Network Name, DNN for a LADN service area;
obtaining the analytics information from the NWDAF in response to the request; and
determining whether to perform a first procedure or a second procedure for a LADN Protocol Data Unit, PDU, session, based on the analytics information,
wherein the first procedure is a procedure for releasing the LADN PDU session,
wherein the second procedure is a procedure for deactivating the LADN PDU session in which a user plane resource is released while maintaining the LADN PDU session,
wherein the analytics ID is set to UE Presence Pattern, and
wherein the analytics information is related to a UE presence pattern in the LADN service area.

## Patentansprüche

1. Verfahren, das durch eine Sitzungsverwaltungsfunktion (SMF) (42) durchgeführt wird, wobei das Verfahren Folgendes umfasst:
Übertragen einer Anfrage nach Analyseinformationen über ein spezifisches Benutzergerät (UE) (10, 100) oder eine Gruppe von UEs (10, 100) an eine Netzwerkdaten-Analysefunktion (NWDAF),
wobei die Anforderung i) eine Analysekennung (ID) und ii) Analysefilterinformationen beinhaltet, und
wobei die Analysefilterinformationen ein Local Area Data Network (LADN), Data Network Name (DNN) für einen LADN-Dienstbereich beinhalten;
Erhalten der Analyseinformationen von der NWDAF als Reaktion auf die Anforderung; und
Bestimmen, ob eine erste Prozedur oder eine zweite Prozedur für eine LADN-Protokolldateneinheit-(PDU)-Sitzung durchgeführt werden soll, basierend auf den Analyseinformationen,
wobei die erste Prozedur eine Prozedur zum Freigeben der LADN-PDU-Sitzung ist,
wobei die zweite Prozedur eine Prozedur zum Deaktivieren der LADN-PDU-Sitzung ist, in der eine Benutzerebenenressource freigegeben wird, während die LADN-PDU-Sitzung beibehalten wird,
wobei die Analyse-ID auf UE-Präsenzmuster gesetzt ist, und
wobei sich die Analyseinformationen auf ein UE-Präsenzmuster in dem LADN-Dienstbereich beziehen.

2. Verfahren nach Anspruch 1, wobei das zweite Verfahren Folgendes umfasst:
Empfangen einer Benachrichtigung, dass sich ein UE (10, 100) aus dem LADN-Dienstbereich von einer Zugangs- und Mobilitätsverwaltungsfunktion (AMF) (41) bewegt hat.

3. Verfahren nach Anspruch 2, wobei das zweite Verfahren Folgendes umfasst:
basierend darauf, dass sich das UE (10, 100) aus dem LADN-Dienstbereich bewegt, Übertragen einer Nachricht, um eine entsprechende Benutzerebenenfunktion (UPF) (44) anzufordern, Downlink-Daten für die LADN-PDU-Sitzung zu verwerfen und keine weiteren Datenbenachrichtigungsmeldungen zu übertragen.

4. Verfahren nach Anspruch 3, wobei das zweite Verfahren Folgendes umfasst:
Übertragen einer ersten Nachricht an die AMF (41), um Next Generation-(NG)-Radio Access Network-(RAN)-Ressourcen freizugeben, die mit der LADN-PDU-Sitzung verbunden sind, wobei die erste Nachricht eine PDU-Sitzungs-ID und N2 Session Management-(SM)-Informationen beinhaltet, wobei die N2 SM-Informationen eine N2-Ressourcen-Freigabeanfrage enthalten und wobei die N2-Ressourcen-Freigabeanfrage eine PDU-Sitzungs-ID beinhaltet; und
Empfangen einer zweiten Nachricht als Reaktion auf die erste Nachricht von der AMF (41), wobei die zweite Nachricht N2 SM-Informationen beinhaltet und wobei die N2 SM-Informationen sekundäre Funkzugangstechnologie-(RAT)-Nutzungsdaten beinhalten.

5. Verfahren nach einem der Ansprüche 1 bis 4, wobei die Analyseinformationen UE-Präsenzmusterinformationen innerhalb des LADN-Dienstbereichs beinhalten, und
wobei die UE-Präsenzmusterinformationen UE-Präsenzmuster-Statistikinformationen und/oder UE-Präsenzmuster-Vorhersageinformationen beinhalten.

6. Verfahren nach Anspruch 5, wobei die UE-Präsenzmuster-Statistikinformationen eines oder mehrere von Folgendem beinhalten:
einen DNN, der mit einem LADN-Dienst assoziiert ist;
UE-Präsenzmusterinformationen; und
Informationen über einen Prozentsatz, bei dem ein UE (10, 100), ein beliebiges UE (10, 100) oder eine Gruppe von UEs (10, 100) innerhalb des LADN-Dienstbereichs kommen.

7. Verfahren nach Anspruch 5, wobei die UE-Präsenzmuster-Vorhersageinformationen eines oder mehrere von Folgendem beinhalten:
einen DNN, der mit einem LADN-Dienst assoziiert ist;
eine UE-Präsenz, die innerhalb einer Analysezielperiode vorhergesagt wird; und
Informationen über einen Prozentsatz, bei dem ein UE (10, 100), ein beliebiges UE (10, 100) oder eine Gruppe von UEs (10, 100) innerhalb des LADN-Dienstbereichs kommen.

8. Chipsatz, der auf einer Sitzungsverwaltungsfunktion (SMF) (42) montiert ist, wobei der Chipsatz Folgendes umfasst:
mindestens einen Prozessor (1020); und
mindestens einen Speicher zum Speichern von Anweisungen, der mit dem mindestens einen Prozessor (1020) betriebsfähig elektrisch verbunden werden kann, wobei die Anweisungen, basierend auf der Ausführung durch den mindestens einen Prozessor (1020), Operationen durchführen, die Folgendes umfassen:
Übertragen einer Anfrage nach Analyseinformationen über ein spezifisches Benutzergerät (UE) (10, 100) oder eine Gruppe von UEs (10, 100) an eine Netzwerkdaten-Analysefunktion (NWDAF),
wobei die Anforderung i) eine Analysekennung (ID) und ii) Analysefilterinformationen beinhaltet, und
wobei die Analysefilterinformationen ein Local Area Data Network (LADN), Data Network Name (DNN) für einen LADN-Dienstbereich beinhalten;
Erhalten der Analyseinformationen von der NWDAF als Reaktion auf die Anforderung; und
Bestimmen, ob eine erste Prozedur oder eine zweite Prozedur für eine LADN-Protokolldateneinheit-(PDU)-Sitzung durchgeführt werden soll, basierend auf den Analyseinformationen,
wobei die erste Prozedur eine Prozedur zum Freigeben der LADN-PDU-Sitzung ist,
wobei die zweite Prozedur eine Prozedur zum Deaktivieren der LADN-PDU-Sitzung ist, in der eine Benutzerebenenressource freigegeben wird, während die LADN-PDU-Sitzung beibehalten wird,
wobei die Analyse-ID auf UE-Präsenzmuster gesetzt ist, und
wobei sich die Analyseinformationen auf ein UE-Präsenzmuster in dem LADN-Dienstbereich beziehen.

9. Chipsatz nach Anspruch 8, wobei die zweite Prozedur Folgendes umfasst:
Empfangen einer Benachrichtigung, dass sich ein UE (10, 100) aus dem LADN-Dienstbereich von einer Zugangs- und Mobilitätsverwaltungsfunktion (AMF) (41) bewegt hat.

10. Chipsatz nach Anspruch 9, wobei die zweite Prozedur Folgendes umfasst:
basierend darauf, dass sich das UE (10, 100) aus dem LADN-Dienstbereich bewegt, Übertragen einer Nachricht, um eine entsprechende Benutzerebenenfunktion (UPF) (44) anzufordern, Downlink-Daten für die LADN-PDU-Sitzung zu verwerfen und keine weiteren Datenbenachrichtigungsmeldungen zu übertragen.

11. Chipsatz nach Anspruch 10, wobei die zweite Prozedur Folgendes umfasst:
Übertragen einer ersten Nachricht an die AMF (41), um Next Generation-(NG)-Radio Access Network-(RAN)-Ressourcen freizugeben, die mit der LADN-PDU-Sitzung verbunden sind, wobei die erste Nachricht eine PDU-Sitzungs-ID und N2 Session Management-(SM)-Informationen beinhaltet, wobei die N2 SM-Informationen eine N2-Ressourcen-Freigabeanfrage enthalten und wobei die N2-Ressourcen-Freigabeanfrage eine PDU-Sitzungs-ID beinhaltet; und
Empfangen einer zweiten Nachricht als Reaktion auf die erste Nachricht von der AMF (41), wobei die zweite Nachricht N2 SM-Informationen beinhaltet und wobei die N2 SM-Informationen sekundäre Funkzugangstechnologie-(RAT)-Nutzungsdaten beinhalten.

12. Vorrichtung für eine Sitzungsverwaltungsfunktion (SMF) (42), wobei die Vorrichtung Folgendes umfasst:
mindestens einen Transceiver;
mindestens einen Prozessor (1020); und
mindestens einen Speicher zum Speichern von Anweisungen, der betriebsfähig elektrisch mit dem mindestens einen Prozessor (1020) verbunden werden kann,
wobei die Anweisungen, basierend auf der Ausführung durch den mindestens einen Prozessor (1020), die Vorrichtung veranlassen, folgende Operationen durchzuführen:
Übertragen einer Anfrage nach Analyseinformationen über ein spezifisches Benutzergerät (UE) (10, 100) oder eine Gruppe von UEs (10, 100) an eine Netzwerkdaten-Analysefunktion (NWDAF),
wobei die Anforderung i) eine Analysekennung (ID) und ii) Analysefilterinformationen beinhaltet, und
wobei die Analysefilterinformationen ein Local Area Data Network (LADN), Data Network Name (DNN) für einen LADN-Dienstbereich beinhalten;
Erhalten der Analyseinformationen von der NWDAF als Reaktion auf die Anforderung; und
Bestimmen, ob eine erste Prozedur oder eine zweite Prozedur für eine LADN-Protokolldateneinheit-(PDU)-Sitzung durchgeführt werden soll, basierend auf den Analyseinformationen,
wobei die erste Prozedur eine Prozedur zum Freigeben der LADN-PDU-Sitzung ist,
wobei die zweite Prozedur eine Prozedur zum Deaktivieren der LADN-PDU-Sitzung ist, in der eine Benutzerebenenressource freigegeben wird, während die LADN-PDU-Sitzung beibehalten wird,
wobei die Analyse-ID auf UE-Präsenzmuster gesetzt ist, und
wobei sich die Analyseinformationen auf ein UE-Präsenzmuster in dem LADN-Dienstbereich beziehen.

## Revendications

1. Procédé réalisé par une fonction de gestion de session, « Session Management Function » SMF, (42), le procédé comprenant :
la transmission d'une demande d'informations d'analyse concernant un équipement utilisateur, « User Equipment » UE, spécifique (10, 100) ou un groupe d'UEs (10, 100) à une fonction d'analyse de données de réseau, « Network Data Analytics Function » NWDAF,
dans lequel la demande inclut i) un identifiant, ID, d'analyse, et ii) des informations de filtre d'analyse, et
dans lequel les informations de filtre d'analyse incluent un nom de réseau de données, « Data Network Name », DNN, de réseau de données local, « Local Area Data Network » LADN pour une zone de service LADN ;
l'obtention des informations d'analyse auprès de la NWDAF en réponse à la demande ; et
la détermination qu'il faut réaliser une première procédure ou une seconde procédure pour une session à unité de données de protocole, « Protocol Data Unit » PDU, LADN, sur la base des informations d'analyse,
dans lequel la première procédure est une procédure pour libérer la session à PDU LADN,
dans lequel la seconde procédure est une procédure pour désactiver la session à PDU LADN dans laquelle une ressource de plan utilisateur est libérée tout en maintenant la session à PDU LADN,
dans lequel l'ID d'analyse est réglé à un schéma de présence d'UE, et
dans lequel les informations d'analyse sont connexes à un schéma de présence d'UE dans la zone de service LADN.

2. Procédé de la revendication 1, dans lequel la seconde procédure comprend :
la réception d'une notification qu'un UE (10, 100) a quitté la zone de service LADN en provenance d'une fonction de gestion d'accès et de mobilité, « Access and Mobility Management Function » AMF (41).

3. Procédé de la revendication 2, dans lequel la seconde procédure comprend :
sur la base du fait que l'UE (10, 100) quitte la zone de service LADN, la transmission d'un message pour demander à une fonction de plan utilisateur, « User Plane Function » UPF, correspondante (44) de rejeter des données de liaison descendante pour la session à PDU LADN et de ne pas transmettre de messages de notification de données supplémentaires.

4. Procédé de la revendication 3, dans lequel la seconde procédure comprend :
la transmission d'un premier message à l'AMF (41) pour libérer des ressources de réseau d'accès radio, « Radio Access Network » RAN, de génération suivante, « Next Generation » NG, associées à la session à PDU LADN, dans lequel le premier message inclut un ID de session à PDU et des informations de gestion de session, « Session Management » SM, de N2, dans lequel les informations de SM de N2 incluent une demande de libération de ressource de N2, et dans lequel la demande de libération de ressource de N2 inclut un ID de session à PDU ; et
la réception d'un second message en réponse au premier message en provenance de l'AMF (41), dans lequel le second message inclut des informations de SM de N2, et dans lequel les informations de SM de N2 incluent des données d'usage de technologie d'accès radio, « Radio Access Technology » RAT, secondaires.

5. Procédé de quelconques revendications 1 à 4, dans lequel les informations d'analyse incluent des informations de schéma de présence d'UE à l'intérieur de la zone de service LADN, et
dans lequel les informations de schéma de présence d'UE incluent un ou plusieurs types d'informations parmi des informations de statistique de schéma de présence d'UE et des informations de prédiction de schéma de présence d'UE.

6. Procédé de la revendication 5, dans lequel les informations de statistique de schéma de présence d'UE incluent un ou plusieurs éléments parmi :
un DNN associé à un service LADN ;
des informations de schéma de présence d'UE ; et
des informations concernant un pourcentage auquel un UE (10, 100), un quelconque UE (10, 100) ou un groupe d'UEs (10, 100) arrivent à l'intérieur de la zone de service LADN.

7. Procédé de la revendication 5, dans lequel les informations de prédiction de schéma de présence d'UE incluent un ou plusieurs éléments parmi :
un DNN associé à un service LADN ;
une présence d'UE prédite dans les limites d'une période cible d'analyse ; et
des informations concernant un pourcentage auquel un UE (10, 100), un quelconque UE (10, 100) ou un groupe d'UEs (10, 100) arrivent à l'intérieur de la zone de service LADN.

8. Jeu de puces monté sur une fonction de gestion de session, « Session Management Function » SMF, (42), le jeu de puces comprenant :
au moins un processeur (1020) ; et
au moins une mémoire destinée à stocker des instructions et pouvant fonctionnellement être connectée électriquement à l'au moins un processeur (1020), dans lequel les instructions, sur la base du fait d'être exécutées par l'au moins un processeur (1020), réalisent des opérations comprenant :
la transmission d'une demande d'informations d'analyse concernant un équipement utilisateur, « User Equipment » UE, spécifique (10, 100) ou un groupe d'UEs (10, 100) à une fonction d'analyse de données de réseau, « Network Data Analytics Function » NWDAF,
dans lequel la demande inclut i) un identifiant, ID, d'analyse, et ii) des informations de filtre d'analyse, et
dans lequel les informations de filtre d'analyse incluent un nom de réseau de données, « Data Network Name », DNN, de réseau de données local, « Local Area Data Network » LADN pour une zone de service LADN ;
l'obtention des informations d'analyse auprès de la NWDAF en réponse à la demande ; et
la détermination qu'il faut réaliser une première procédure ou une seconde procédure pour une session à unité de données de protocole, « Protocol Data Unit » PDU, LADN, sur la base des informations d'analyse,
dans lequel la première procédure est une procédure pour libérer la session à PDU LADN,
dans lequel la seconde procédure est une procédure pour désactiver la session à PDU LADN dans laquelle une ressource de plan utilisateur est libérée tout en maintenant la session à PDU LADN,
dans lequel l'ID d'analyse est réglé à un schéma de présence d'UE, et
dans lequel les informations d'analyse sont connexes à un schéma de présence d'UE dans la zone de service LADN.

9. Jeu de puces de la revendication 8, dans lequel la seconde procédure comprend :
la réception d'une notification qu'un UE (10, 100) a quitté la zone de service LADN en provenance d'une fonction de gestion d'accès et de mobilité, « Access and Mobility Management Function » AMF (41).

10. Jeu de puces de la revendication 9, dans lequel la seconde procédure comprend :
sur la base du fait que l'UE (10, 100) quitte la zone de service LADN, la transmission d'un message pour demander à une fonction de plan utilisateur, « User Plane Function » UPF, correspondante (44) de rejeter des données de liaison descendante pour la session à PDU LADN et de ne pas transmettre de messages de notification de données supplémentaires.

11. Jeu de puces de la revendication 10, dans lequel la seconde procédure comprend :
la transmission d'un premier message à l'AMF (41) pour libérer des ressources de réseau d'accès radio, « Radio Access Network » RAN, de génération suivante, « Next Generation » NG, associées à la session à PDU LADN, dans lequel le premier message inclut un ID de session à PDU et des informations de gestion de session, « Session Management » SM, de N2, dans lequel les informations de SM de N2 incluent une demande de libération de ressource de N2, et dans lequel la demande de libération de ressource de N2 inclut un ID de session à PDU ; et
la réception d'un second message en réponse au premier message en provenance de l'AMF (41), dans lequel le second message inclut des informations de SM de N2, et dans lequel les informations de SM de N2 incluent des données d'usage de technologie d'accès radio, « Radio Access Technology » RAT, secondaires.

12. Dispositif pour une fonction de gestion de session, « Session Management Function » SMF, (42), le dispositif comprenant :
au moins un émetteur-récepteur ;
au moins un processeur (1020) ; et
au moins une mémoire destinée à stocker des instructions et pouvant fonctionnellement être connectée électriquement à l'au moins un processeur (1020),
dans lequel les instructions, sur la base du fait d'être exécutées par l'au moins un processeur (1020), amènent le dispositif à réaliser des opérations comprenant :
la transmission d'une demande d'informations d'analyse concernant un équipement utilisateur, « User Equipment » UE, spécifique (10, 100) ou un groupe d'UEs (10, 100) à une fonction d'analyse de données de réseau, « Network Data Analytics Function » NWDAF,
dans lequel la demande inclut i) un identifiant, ID, d'analyse, et ii) des informations de filtre d'analyse, et
dans lequel les informations de filtre d'analyse incluent un nom de réseau de données, « Data Network Name », DNN, de réseau de données local, « Local Area Data Network » LADN pour une zone de service LADN ;
l'obtention des informations d'analyse auprès de la NWDAF en réponse à la demande ; et
la détermination qu'il faut réaliser une première procédure ou une seconde procédure pour une session à unité de données de protocole, « Protocol Data Unit » PDU, LADN, sur la base des informations d'analyse,
dans lequel la première procédure est une procédure pour libérer la session à PDU LADN,
dans lequel la seconde procédure est une procédure pour désactiver la session à PDU LADN dans laquelle une ressource de plan utilisateur est libérée tout en maintenant la session à PDU LADN,
dans lequel l'ID d'analyse est réglé à un schéma de présence d'UE, et
dans lequel les informations d'analyse sont connexes à un schéma de présence d'UE dans la zone de service LADN.
